# EUROPÄISCHE PATENTANMELDUNG

(11) **EP 4 311 838 A1**
(43) Veröffentlichungstag der Anmeldung: **31.01.2024**
(21) Anmeldenummer: 22186639.5
(22) Anmeldetag: 25.07.2022
(51) Int. Cl.: C08G 64/14, C08G 64/24, C08G 64/42, C08G 81/00, C08K 3/32, C08G 81/02

(54) **CARBOXY-TERMINIERTES POLYCARBONAT UND HERSTELLVERFAHREN**

(71) Anmelder: Covestro Deutschland AG, 51373 Leverkusen (DE)
(72) Erfinder: Seidel, Andreas, 41542 Dormagen (DE); Reithmeier, Marina, 51069 Köln (DE); Heijl, Jan, 9160 Lokeren (BE)
(74) Vertreter: Levpat

(57) **Zusammenfassung**

Die Erfindung betrifft ein Polycarbonat enthaltend von Bisphenol-A abgeleitete Struktureinheiten und
A) von einer Hydroxybenzoesäure abgeleitete, als Endgruppen vorliegende Struktureinheiten mit freier COOH-Funktionalität und
B) optional von einer Hydroxybenzoesäure abgeleitete Struktureinheiten,
wobei Komponente B) ausgewählt ist aus mindestens einem Vertreter aus
B1) von einer Hydroxybenzoesäure abgeleiteten, als Endgruppen vorliegenden Struktureinheiten mit veresterter COOH-Funktionalität,
und
B2) von einer Hydroxybenzoesäure abgeleiteten Struktureinheiten, welche über eine Ester- oder Säureanhydrid-Gruppe in der Polymer-Kette eingebaut vorliegen,

wobei der Gehalt an freiem Bisphenol A in dem Polycarbonat bei maximal 50 ppm liegt und
wobei für den Fall, dass Komponente B enthalten ist, das Verhältnis der molaren Menge von Komponente B1 zur Summe der molaren Mengen von Komponenten A und B bei maximal 0,07 liegt
sowie ein Verfahren zur Herstellung eines solchen Polycarbonats, die Verwendung eines solchen Polycarbonats in einem Verfahren zur Herstellung von Copolymeren oder von Copolymeren enthaltenden thermoplastischen Massen, ein Copolymer enthaltend von dem Polycarbonat abgeleitete Struktureinheiten, eine thermoplastische (Form)Masse sowie ein Formkörper enthaltend das Polycarbonat und/oder das Copolymer.

## Beschreibung

Die vorliegende Erfindung betrifft ein Polycarbonat enthaltend von Bisphenol-A abgeleitete Struktureinheiten und von einer Hydroxybenzoesäure abgeleitete, als Endgruppen vorliegende Struktureinheiten mit freier COOH-Funktionalität, welches sich durch einen thermostabil geringen Gehalt an freiem Bisphenol-A auszeichnet sowie ein Verfahren zur Herstellung eines solchen Polycarbonats, die Verwendung des Polycarbonats in einem Verfahren zur Herstellung von Copolymeren, ein Copolymer enthaltend Struktureinheiten abgeleitet von dem erfindungsgemäßen Polycarbonat, eine thermoplastische (Form)Masse enthaltend das erfindungsgemäße Polycarbonat und/oder das erfindungsgemäße Copolymer sowie ein Formkörper enthaltend das erfindungsgemäße Polycarbonat, das erfindungsgemäße Copolymer und/oder die erfindungsgemäße (Form)Masse.

"Enthaltend von Bisphenol-A abgeleitete Struktureinheiten" bedeutet, dass das Bisphenol-A über die Hydroxy-Gruppen in die Polymerkette kovalent eingebunden vorliegt, wobei die chemische Einbindung über eine Kondensationsreaktion der Hydroxy-Gruppen des Bisphenol-A mit einem Kohlensäurederivat unter Ausbildung einer Carbonat-Funktionalität erfolgt. In analoger Art und Weise bedeutet "enthaltend von einer Hydroxybenzoesäure abgeleitete, als Endgruppen vorliegende Struktureinheiten", dass die Hydroxybenzoesäure über die Hydroxy-Gruppe am Ende der Polymerkette kovalent eingebunden vorliegt, wobei die chemische Einbindung über eine Kondensationsreaktion der Hydroxy-Gruppe der Hydroxybenzoesäure mit einem Kohlensäurederivat unter Ausbildung einer Carbonat-Funktionalität erfolgt.

Zur Herstellung von transparenten oder transluzenten (durchleuchtbaren) Formkörpern wird Polycarbonat, insbesondere solches auf Basis von Bisphenol-A, seit vielen Jahren eingesetzt. Für den Automobilbereich, den Bausektor oder den Elektronikbereich sind in den letzten Jahren Anwendungen mit neuartigen Beleuchtungskonzepten und Funktionsintegration dazugekommen, für die durchleuchtbare Formmassen eingesetzt werden.

Polycarbonat ist aber hinsichtlich wichtiger Eigenschaften wie beispielsweise Kratzfestigkeit, Spannungsrissbeständigkeit unter Chemikalieneinfluss, mechanischen Eigenschafen und Verarbeitungsverhalten (Schmelzefließfähigkeit) für manche Anwendungen nicht ausreichend. Die Entwicklung von Polymerblends von Polycarbonat mit anderen Thermoplasten ist ein häufig verfolgter Ansatz, spezielle technische Anforderungsprofile durch Kombination der spezifischen Eigenschaftsvorteile des Polycarbonats mit denen der polymeren Blendpartner, idealerweise in synergistischer Art und Weise, zu realisieren. Polymerblends aus Polycarbonat (PC) und Polymethylmethacrylat (PMMA) können beispielsweise hinsichtlich Kratzfestigkeit, Spannungsrissbeständigkeit unter Chemikalieneinfluss und Schmelzefließfähigkeit Verbesserungen gegenüber reinem Polycarbonat aufweisen. Gleichzeitig kann die Materialduktilität im Vergleich zu Polymethylmethacrylat erhöht werden.

Die mit Polymerblends erzielbaren vorteilhaften Eigenschaftskombinationen von solchen Polymerblends schließen aber eine Transparenz bzw. Durchleuchtbarkeit von aus ihnen hergestellten Formkörpern oft aus. Polycarbonat und der weitere im Polymerblend enthaltene Thermoplast sind in der Regel nicht vollständig mischbar und bilden daher zweiphasige Morphologien mit einer Matrixphase aus dem einen Polymer und darin verteilten Domänen des anderen Polymers aus. Aufgrund der üblicherweise unterschiedlichen Brechungsindizes der Blendpartner findet an der Vielzahl der Phasengrenzflächen eine Lichtstreuung statt und die Lichttransmission ist insofern insgesamt erheblich gegenüber derer der reinen Blendkomponenten verringert. In der Regel sind solche Blends aus Polycarbonat und mit Polycarbonat nicht mischbaren Polymeren also opak, d.h. nicht oder nur mit einer unzureichenden Lichtausbeute durchleuchtbar.

Weiterhin können die Phasengrenzflächen mechanische Schwachstellen darstellen und insbesondere unter Chemikalieneinfluss zu Materialversagen führen.

Eine in der Literatur beschriebene Möglichkeit, eine verbesserte Kompatibilität von Polycarbonat zu einem mit PC nicht mischbaren thermoplastischen Blendpartner wie beispielsweise PMMA zu erreichen, ist die in-situ Bildung von Blockcopolymeren aus Polycarbonat und dem polymeren Blendpartner, in diesem speziellen Fall also PMMA, in einer Reaktivextrusion. Dabei kann die chemische Reaktion der beiden Polymeren an der Phasengrenzfläche der zweiphasigen Schmelzemischung durch den Einsatz eines Katalysators beschleunigt werden.

WO 2020/212229 A1 offenbart ein Reaktivcompoundierungsverfahren zur Herstellung einer thermoplastischen Formmasse unter Einsatz von aromatischem Polycarbonat, welches keine reaktiven funktionellen Gruppen enthält, und einem weiteren Polymer, welches mindestens eine Art funktioneller Gruppen ausgewählt aus Ester-, Epoxy-, Hydroxy-, Carboxy- und CarbonsäureanhydridGruppen enthält, wobei als Katalysator ein spezielles Phosphoniumsalz eingesetzt wird. Die Anmeldung offenbart insbesondere auch die Herstellung transparenter thermoplastischer PC/PMMA-Formmassen in einem solchen Verfahren.

WO 2016/138246 A1 offenbart transparente PC/PMMA-Blends enthaltend 9,9 bis 40 Gew.-% Polycarbonat und 59,9 bis 90 Gew.-% PMMA, welche aus nicht reaktiv funktionalisierten Polymerkomponenten in einer reaktiven Schmelzextrusion unter Einsatz von 0,0025 bis 0,1 Gew.-% eines Zinn-Katalysators hergestellt werden.

WO 2016/189494 A1 offenbart transparente PC/PMMA-Blends enthaltend 80 bis 95 Gew.-% eines speziell spezifizierten verzweigten Polycarbonats mit einem End-Cap-Gehalt von 45% bis 80% und 4,9 bis 20 Gew.-% PMMA, welche in einer Schmelzextrusion durch Umesterung unter Einsatz von 0,1 bis 1,5 Gew.-% eines Katalysators, bevorzugt ausgewählt aus Zn-, Sn- und Ag-Verbindungen, hergestellt werden.

Formteile aus nach diesen Verfahren hergestellten Blendzusammensetzungen sind zwar hinsichtlich der Lichttransmission gegenüber Formteilen aus durch rein physikalische Mischprozesse hergestellten PC/PMMA-Zusammensetzungen verbessert, weisen aber in der Regel eine für viele Anwendungen noch nicht ausreichende Lichtausbeute bei Durchleuchtung und nicht ausreichende mechanische Eigenschaften auf.

Neben dem beschriebenen Einsatz eines Katalysators kann durch eine geeignete Funktionalisierung des Polycarbonats die in-situ Bildung von Copolymeren ebenfalls begünstigt werden.

US 4,853,458 und US 4,959,411 beschreiben die Herstellung von endständig Carboxyfunktionalisierten Polycarbonaten, wobei ein Carbonsäure- oder Carbonsäurederivat-substituiertes Phenol, vorzugsweise t-Butyl-p-hydroxybenzoat, als Kettenabbrecher in einer Polycarbonat-bildenden Reaktion terminal in das PC eingebaut wird. Auch offenbart wird ein Verfahren zur Herstellung eines Blockcopolymers durch Reaktion in organischer Lösung oder in einer Schmelzecompoundierung eines Epoxy-funktionalisierten Olefin-Polymers mit einem solchen Carboxy- oder Carbonsäurederivatfunktionalisierten Polycarbonat sowie die Verwendung eines solchen Copolymers zur Kompatibilisierung von Polymerblends aus Polycarbonat und Polyolefin mit dem Ziel der Reduktion ihrer Neigung zur Delamination. Zur Eignung derartig funktionalisierter Polycarbonate zur Herstellung transparenter PC/PMMA-Blends geben diese Anmeldungen keine Hinweise.

Für den letztgenannten Ansatz einer Reaktion zwischen einem geeignet funktionalisieren Polycarbonat und einem geeignet funktionalisierten polymeren Blendpartner als Verfahren zur Herstellung eines Blockcopolymers ist die genaue Art der Funktionalisierung des Polycarbonats, d.h. die Auswahl und Konzentration geeigneter reaktiver Gruppen, von großer Bedeutung im Hinblick auf den Erfolg eines Verfahrens zur Herstellung des Blockcopolymers in einer für die angestrebte Anwendung erforderlichen Qualität. Hinsichtlich der Reaktivität und Selektivität der Reaktion mit Epoxy-funktionalisierten Polymeren hat es sich bei einer Herstellung von Blockcopolymeren in einer Schmelzecompoundierung als besonders vorteilhaft erwiesen, Carboxy-funktionalisierte Polycarbonate zu verwenden, wie sie in der US 4,853,458 und US 4,959,411 beschrieben sind.

Ein für die angestrebten Anwendungen wesentliches Qualitätsmerkmal ist hierbei ein möglichst geringer Restgehalt an unerwünschten Komponenten, die im Verfahren der nachgeschalteten Blockcopolymerherstellung nicht oder nur unvollständig wieder entfernt werden können. Insbesondere ist es vor dem Hintergrund der globalen Regulation von freiem Bisphenol-A in Polymeren, Zusammensetzungen und Artikeln anzustreben, dass der Gehalt an freiem Bisphenol-A in solchen funktionalisierten Polycarbonaten enthaltend von Bisphenol-A abgeleitete Struktureinheiten möglichst gering ist. Diese Bestrebung wird durch das umweltpolitische Ziel getrieben, die Freisetzung von Bisphenol-A in die Umwelt im Rahmen der Verwendung derartiger Produkte in ihrem Lebenszyklus zu minimieren. Vor dem Hintergrund des in der Europäischen Union unter der REACH-Regulation aktuell laufenden Beschränkungsvorhabens ist hier ein Wert im Bereich <50 Gew.-ppm, bevorzugt <20 Gew.-ppm, besonders bevorzugt <10 Gew.-ppm in Polymeren, Zusammensetzungen und Artikeln wünschenswert.

Bisphenol-A selbst weist bei den Temperaturen der Auf- und/oder Weiterverarbeitung der erfindungsgemäßen Polycarbonate durch beispielsweise eine Schmelzeentgasung, bei der Herstellung der Copolymere aus solchen Polycarbonaten in einer Kopplungsreaktion in der Schmelze, sowie bei der Herstellung von thermoplastischen Formmassen enthaltend solche Polycarbonate oder Copolymere durch Compoundierung bzw. bei deren weiteren thermischen Formgebung eine vernachlässigbare Flüchtigkeit auf. Insofern lässt sich freies Bisphenol-A, welches das Polycarbonat herstellungsbedingt enthält, in diesen nachgelagerten Verarbeitungsschritten nicht mehr effektiv aus dem Produkt eliminieren.

Bei solchen der Herstellung des Carboxy-terminierten Polycarbonats nachgeschalteten thermischen Verarbeitungsschritten wird im Allgemeinen sogar weiteres freies Bisphenol-A aus der Polymerkette durch Rückspaltung gebildet, wodurch sich dessen Gehalt im finalen Vermarktungsprodukt weiter erhöht.

Insofern war es wünschenswert, ein Carboxy-terminiertes Polycarbonat sowie ein Verfahren zur Herstellung eines bevorzugt Carboxy-terminierten Polycarbonats bereitzustellen, wobei das (bevorzugt Carboxy-terminierte) Polycarbonat eine verbesserte Stabilität gegenüber Bildung von freiem Bisphenol-A durch Rückspaltung bei einer thermischen Belastung aufweist, beispielsweise bei seiner Aufarbeitung in einer Schmelzeentgasung, bei einer Verwendung zur Herstellung eines Blockcopolymers in einer Schmelzereaktion im Rahmen einer Reaktivextrusion (auch als Schmelzecompoundierung bezeichnet im Rahmen dieser Erfindung), bei der Herstellung einer thermoplastischen Formmasse enthaltend ein solches Polycarbonat oder ein solches Blockcopolymer in einer Schmelzecompoundierung und/oder bei der thermischen Formgebung eines solchen Polycarbonats, eines solche Blockcopolymers oder einer thermoplastischen Zusammensetzung enthaltend ein solches Polycarbonat oder ein solches Blockcopolymer.

Weiterhin war es wünschenswert, die Qualität der Carboxy-terminierten Polycarbonate dahingehend zu verbessern, dass sie sich besser eignen zur Herstellung von Blockcopolymeren oder zur Herstellung solcher derartige Blockcopolymere enthaltenden Polymerformmassen mit verbesserten technischen Eigenschaften, wobei die Herstellung der Blockcopolymeren oder der diese Blockcopolymere enthaltenden Polymerformmassen in der Schmelzemischung in einer Reaktivextrusion, synonym im Folgenden in diesem Zusammenhang auch als Schmelzecompoundierung bezeichnet, mit einem Epoxy-funktionalisierten, von Polycarbonat verschiedenen Polymer erfolgt.

Eine anzustrebende technische Verbesserung der durch Schmelzecompoundierung aus dem Carboxy-terminierten Polycarbonat hergestellten Blockcopolymeren oder der durch Schmelzecompoundierung aus dem Carboxy-terminierten Polycarbonat hergestellten, diese Blockcopolymere enthaltenden Polymerformmassen kann beispielsweise in besseren Eigenschaften der Blockcopolymere beziehungsweise der diese Blockcopolymere enthaltenden Polymerformmassen selbst (beispielsweise verbesserte mechanischen Eigenschaften, Kratzfestigkeit, Chemikalienresistenz, erhöhte Lichttransmission (Transparenz), hinsichtlich Farbort und/oder dessen Thermostabilität verbesserte Farbneutralität und/oder reduzierter Gehalt an freiem Bisphenol-A bzw. verbesserte Thermostabilität des Gehalts an freiem Bisphenol-A in weiteren thermischen Verarbeitungsschritten wie beispielsweise der Compoundierung von Zusammensetzungen enthaltend die Copolymere und/oder die Formgebung der Copolymere oder der solche Copolymere enthaltenden thermoplastischen Formmassen) bestehen.

Eine alternativ anzustrebende technische Verbesserung der durch Schmelzecompoundierung aus dem Carboxy-terminierten Polycarbonat hergestellten Blockcopolymeren oder der durch Schmelzecompoundierung aus dem Carboxy-terminierten Polycarbonat hergestellten, diese Blockcopolymere enthaltenden Polymerformmassen kann in deren höheren Wirksamkeit als Verträglichkeitsvermittler in Polymerblends oder der höheren Wirksamkeit als funktionales Additiv in Polymer-Formmassen, insbesondere in Polycarbonat-Formmassen, bestehen.

Die Carboxy-terminierten Polycarbonate, welche hergestellt werden in einem Herstellungsverfahren gemäß US 4,853,458 und US 4,959,411, befriedigen die zuvor beschriebenen Wünsche nur unzureichend.

In dem in diesen Dokumenten offenbarten Verfahren werden die endständigen Carboxy-Funktionen im Polycarbonat durch thermische Endgruppenpyrolyse eines Polycarbonats freigesetzt, welches als Endgruppen Struktureinheiten enthält, die von einem Carbonsäurederivat-substituierten Phenol, vorzugsweise von einem Carbonsäureester-substituierten Phenol, besonders bevorzugt von tert.-Butyl-p-hydroxybenzoat, abgeleitet sind. Bei dieser thermischen Endgruppenpyrolyse können die gebildeten Carboxy-Endgruppen aber in nicht unerheblichem Umfang, insbesondere bei hohen Temperaturen, mit Carbonat-Funktionen in der Polymerkette in einer Umesterung reagieren, während bei niedrigeren Temperaturen im Allgemeinen die Endgruppenpyrolyse nicht oder nicht vollständig verläuft. Somit sind die möglichen Verfahren zur Herstellung der Carboxy-terminierten Polycarbonate gemäß dem Stand der Technik auf ein sehr enges, technisch nur schwierig kontrolliert zu realisierendes Prozessfenster eingeschränkt.

Insofern war es auch wünschenswert - nicht zuletzt aus Gründen einer anzustrebenden Realisierung eines möglichst energieeffizienten Verfahrens -, ein Verfahren zur Herstellung der Carboxy-terminierten Polycarbonaten bereitzustellen, bei dem bereits bei reduzierten Temperaturen die Endgruppenpyrolyse vollständig verläuft, um so den Abstand zur maximal erlaubten Verfahrenstemperatur, oberhalb derer die unerwünschte Umesterung in nennenswerten Umfang einsetzt, und dadurch die Breite des in diesem Niedertemperatur-Regime erlaubten Verarbeitungsfensters zu vergrößern.

Weiterhin war es auch wünschenswert, ein Verfahren zur Herstellung der Carboxy-terminierten Polycarbonate bereitzustellen, bei dem auch höhere Temperaturen in der Endgruppenpyrolyse erlaubt sind, ohne dass dabei die zunächst durch Endgruppenpyrolyse erzeugten terminalen Carboxy-Gruppen in nennenswertem Umfang oder gar vollständig in einer unerwünschten Folgereaktion (beispielsweise einer Umesterung) im selben Verfahrensschritt wieder abreagieren. Weiterhin war es wünschenswert, dass das hergestellte Polycarbonat einer Aufarbeitung gemäß technisch üblicher Verfahren, wie beispielsweise einer Schmelzeentgasung, die üblicherweise bei Polycarbonaten bei Temperaturen >280°C, oft auch >300°C oder gar >320°C erfolgt, zugeführt werden kann, ohne dass dabei die Carboxy-Gruppen in nennenswerten Umfang oder gar vollständig in einer unerwünschten Folgereaktion abreagieren.

An transparente Formkörper oder transluzente Formkörper, die in ihrer Anwendung durchleuchtet werden sollen, bestehen im Allgemeinen hohe Anforderungen an die Eigenfarbe und dessen Konstanz, das heißt Unabhängigkeit von beispielsweise den exakten Bedingungen der Herstellung und/oder der Qualität der zu ihrer Herstellung verwendeten Rohstoffe. Oft wird für solche Formkörper eine hohe und wellenlängenunabhängige Lichttransmission über das gesamte Wellenlängenspektrum des sichtbaren Lichtes gefordert, welches in einem farbneutralen (das heißt im Wesentlichen farblosen) Erscheinungsbild resultiert. Somit war es bevorzugt auch wünschenswert Carboxy-terminierte Polycarbonate bereitzustellen, welche die zuvor genannten Anforderungen erfüllen und sich durch einen verbesserten Rohton und/oder eine verbesserte Stabilität dieses Rohtons bei thermischer Belastung auszeichnen, das heißt bevorzugt möglichst unabhängig von ihrer thermischen Historie eine hohe und weitgehend wellenlängenunabhängige Lichttransmission über das gesamte Wellenlängenspektrum des sichtbaren Lichtes aufweisen, welches in einem möglichst farbneutralen (das heißt im Wesentlichen farblosen) Erscheinungsbild resultiert.

Es war also wünschenswert, ein Polycarbonat enthaltend in der Polymerkette, im Folgenden auch synonym als Polymerrückgrat bezeichnet, von Bisphenol-A abgeleitete Struktureinheiten und von einer Hydroxybenzoesäure abgeleitete, als Endgruppen vorliegende Struktureinheiten mit freier COOH-Funktionalität, mit einem nach thermischer Belastung niedrigen Gehalt an freiem Bisphenol-A, sowie bevorzugt mit einem möglichst farbneutralen, weiter bevorzugt möglichst mit einem thermostabil farbneutralen Erscheinungsbild, sowie ein Verfahren zu dessen Herstellung bereitzustellen, wobei sich das Polycarbonat bevorzugt besser eignet für die Herstellung von technisch verbesserten Copolymeren und/oder technisch verbesserten Copolymeren enthaltenden Formmassen und/oder von das Polycarbonat enthaltenden thermoplastischen Formmassen oder jeweils daraus hergestellten Artikeln mit jeweils einem bevorzugt ebenfalls geringen Gehalt an freiem Bisphenol-A, wobei die Copolymere mindestens einen Polycarbonat-Block mit von Bisphenol-A abgeleiteten Struktureinheiten enthalten.

Es war insbesondere wünschenswert, ein solches Polycarbonat bereitzustellen, dass sich besonders gut für die Herstellung von thermoplastischen Formmassen enthaltend Polycarbonat und ein Vinyl(co)polymer, bevorzugt Polymethylmethacrylat, eignet, wobei diese thermoplastischen Formmassen zur Herstellung durchleuchtbarer Formkörper geeignet sind, also eine hohe Transparenz aufweisen.

Ebenso war es wünschenswert, ein Verfahren bereitzustellen, mit dem ein Carboxy-funktionalisiertes Polycarbonat mit hohem Gehalt an COOH-Endgruppen verfahrenstechnisch einfacher und stabiler (das heißt über ein breiteres Verfahrensparameterfenster mit weniger qualitätsbedingtem Ausschuss und/oder selteneren Verfahrensstörungen), kostengünstiger und/oder energieeffizienter hergestellt werden kann.

Überraschenderweise wurde nun gefunden, dass ein Polycarbonat enthaltend von Bisphenol-A abgeleitete Struktureinheiten und
A) von einer Hydroxybenzoesäure abgeleitete, als Endgruppen vorliegende Struktureinheiten mit freier COOH-Funktionalität und
B) optional von einer Hydroxybenzoesäure abgeleitete Struktureinheiten,
   wobei Komponente B) ausgewählt ist aus mindestens einem Vertreter aus
   B1) von einer Hydroxybenzoesäure abgeleiteten, als Endgruppen vorliegenden Struktureinheiten mit veresterter COOH-Funktionalität,
      und
   B2) von einer Hydroxybenzoesäure abgeleiteten Struktureinheiten, welche über eine Ester- oder Säureanhydrid-Gruppe in der Polymer-Kette eingebaut vorliegen,
      wobei der Gehalt an freiem Bisphenol A in dem Polycarbonat bei maximal 50 ppm, bevorzugt maximal 20 ppm, besonders bevorzugt maximal 10 ppm liegt und
      wobei für den Fall, dass Komponente B enthalten ist, das Verhältnis der molaren Menge von Komponente B1 zur Summe der molaren Mengen von Komponenten A und B bei maximal 0,07, bevorzugt bei maximal 0,05, weiter bevorzugt bei maximal 0,02, besonders bevorzugt bei maximal 0,01 liegt,
   mindestens eine der gewünschten Eigenschaften aufweist.

Bevorzugte erfindungsgemäße Polycarbonate zeichnen sich dadurch aus, dass Komponente B enthalten ist.

Weiter bevorzugte erfindungsgemäße Polycarbonate zeichnen sich dadurch aus, dass Komponente B2 enthalten ist und das Verhältnis der molaren Menge von Komponente B2 zur Summe der molaren Mengen von Komponenten A und B2 bei 0,001 bis 0,25 liegt.

Die erfindungsgemäßen Polycarbonate zeichnen sich bevorzugt dadurch aus, dass das Verhältnis der molaren Menge von Komponente B2 zur Summe der molaren Mengen von Komponenten A und B2 bei maximal 0,12, bevorzugt bei maximal 0,10, besonders bevorzugt bei maximal 0,08, am meisten bevorzugt bei maximal 0,03 liegt.

Weitere bevorzugte erfindungsgemäße Polycarbonate zeichnen sich dadurch aus, dass das Verhältnis der molaren Menge von Komponente A zur molaren Menge von Komponente B bei mindestens 8, weiter bevorzugt mindestens 10, besonders bevorzugt mindestens 12, am meisten bevorzugt mindestens 25 liegt.

Die erfindungsgemäßen Polycarbonate können in einer bevorzugten Ausführungsform weiterhin optional
C) von mindestens einer phenolischen Verbindung mit nur einer phenolischen OH-Funktionalität, welche keine Carboxy- oder Carboxyderivat-Funktionalität enthält, abgeleitete, als Endgruppen vorliegende Struktureinheiten, enthalten.

Derartige phenolische Verbindungen mit nur einer phenolischen OH-Funktionalität, welche keine Carboxy- oder Carboxyderivat-Funktionalität enthalten, werden im Rahmen der vorliegenden Erfindung auch als Monophenole, welche keine Carboxy- oder Carboxyderivat-Funktionalität enthalten, bezeichnet.

Solche erfindungsgemäßen Polycarbonate, die Komponente C) enthalten, enthalten diese in einem molaren Anteil, bezogen auf in Summe 100 mol-% der molaren Anteile der Komponenten A, B1, B2 und C, von bevorzugt 50 bis 90 mol-%, weiter bevorzugt 60 bis 80 mol-%, besonders bevorzugt 65 bis 75 mol-%.

Dabei sind die zuvor genannten Vorzugsbereiche der molaren Mengenverhältnisse von A zu B, von B2 zur Summe aus A und B2, von B1 zur Summe aus A und B sowie von C zur Summe aus A, B1, B2 und C beliebig miteinander kombinierbar.

Am meisten bevorzugt sind solche Polycarbonate gemäß der Merkmale zuvor, in denen das Verhältnis der molaren Menge von Komponente A zur molaren Menge von Komponente B bei mindestens 25, das Verhältnis der molaren Menge von Komponente B2 zur Summe der molaren Mengen von Komponenten A und B2 bei maximal 0,08 und das Verhältnis der molaren Menge von Komponente B1 zur Summe der molaren Mengen von Komponenten A und B bei maximal 0,01 liegt.

Die molare Menge an Komponente B berechnet sich als Summe der molaren Mengen an Komponenten B1 und B2.

Bevorzugte erfindungsgemäßen Polycarbonate sind gekennzeichnet durch eine Säurezahl im Bereich von 0,3 bis 30 mg Kaliumhydroxid (KOH)/g, bevorzugt im Bereich von 0,5 bis 20 mg Kaliumhydroxid (KOH)/g, am meisten bevorzugt im Bereich von 1,0 bis 10 mg Kaliumhydroxid (KOH)/g, jeweils bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur.

Ein weiterer Gegenstand der vorliegenden Erfindung ist ein Verfahren zur Herstellung der erfindungsgemäßen Polycarbonate.

Es wurde überraschenderweise gefunden, dass die Herstellung eines Polycarbonats (II), bevorzugt enthaltend von Bisphenol-A abgeleitete Struktureinheiten und von mindestens einer Hydroxybenzoesäure abgeleitete Endgruppen mit freier COOH-Funktionalität, vorteilhafterweise erfolgen kann durch ein Verfahren, wobei
ein Polycarbonat (I), bevorzugt enthaltend von Bisphenol-A abgeleitete Struktureinheiten und von mindestens einem Hydroxybenzoesäureester abgeleitete Endgruppen in Gegenwart von 0,01 bis 0,30 Gew.-%, bevorzugt 0,02 bis 0,15 Gew.-%, besonders bevorzugt 0,03 bis 0,07 Gew.-%, jeweils bezogen auf die Menge des Polycarbonats (I), an phosphoriger Säure H₃PO₃
unter Anlegen eines Unterdrucks für 10 s bis 15 min, bevorzugt für 20 s bis 5 min einer Temperatur im Bereich von 240 bis 360°C, bevorzugt 250 bis 300°C ausgesetzt wird
und dabei das Polycarbonat (II) gebildet wird.

In einem vorhergehenden Schritt kann die Herstellung des Polycarbonats (I) erfolgen durch

Phosgenierung im Phasengrenzflächenverfahren oder in organischer Lösung von Bisphenol-A odereiner Mischung von mehreren, strukturell unterschiedlichen Diolen enthaltend Bisphenol-A in Anwesenheit mindestens eines Esters einer Hydroxybenzoesäure (bevorzugt mindestens eines Esters der p-Hydroxy-Benzoesäure) oder in Anwesenheit einer Mischung enthaltend mindestens einen Ester einer Hydroxybenzoesäure und mindestens ein Monophenol, welches keine Carboxy- oder Carboxyderivat-Funktionalität enthält,
als Kettenabbrecher beziehungsweise Kettenabbrecher-Mischung
wobei der mindestens eine Ester einer Hydroxybenzoesäure ein Ester einer Hydroxybenzoesäure verestert mit
einem Alkohol der allgemeinen Strukturformel (1) 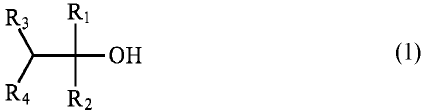 ist,
wobei R₁ und R₂ unabhängig voneinander für Wasserstoff oder einen Alkyl-, Aryl- oder Alkylaryl-Rest mit 1 bis 10 C-Atomen, bevorzugt für Wasserstoff oder einen Alkylrest mit 1 bis 4 C-Atomen, besonders bevorzugt für Wasserstoff oder einen Methyl-Rest, am meisten bevorzugt beide für einen Methylrest stehen und
R₃ und R₄ unabhängig voneinander für Wasserstoff oder einen Alkyl-, Aryl- oder Alkylaryl-Rest mit 1 bis 10 C-Atomen, bevorzugt für Wasserstoff oder einen Alkylrest mit 1 bis 4 C-Atomen, besonders bevorzugt für Wasserstoff oder einen Methyl-Rest, am meisten bevorzugt beide für Wasserstoff stehen.
Nach der Herstellung des Polycarbonats (I) kann eine Aufarbeitung als separater Schritt vor der Herstellung des Polycarbonats (II) erfolgen,
wobei
Lösungsmittel, bevorzugt die bei der Herstellung des Polycarbonats (I) im Verfahrensschritt zum Einsatz gekommenen Lösungsmittel, bevorzugt bis zu einem Restgehalt von <0,1 Gew.-% entfernt werden.

Bevorzugt erfolgt die Aufarbeitung des Polycarbonats (I) durch Sprühtrocknung oder durch Fällung in einem geeigneten Lösungsmittel, beispielsweise und bevorzugt in Isopropanol, Methanol oder Wasser, mit anschließender Abtrennung der Lösungsmittelphase (Mutterlauge). Diese Abtrennung kann beispielsweise durch Filtration oder Sedimentation mit anschließender Dekantierung, durch Zentrifugation oder eine Kombination dieser Verfahren erfolgen. Dieser Abtrennung des gefällten Polycarbonats-Feststoffs wird jeweils gefolgt von einer Trocknung, wobei die Trocknung bevorzugt bei Temperaturen im Bereich 60 bis 120°C, besonders bevorzugt unter Anlegen eines Unterdrucks durchgeführt wird und wobei zwischen der Fällung und der Trocknung optional noch ein oder mehrere Waschschritte an dem gefällten Feststoff erfolgen können, die dem Zweck dienen, verfahrensbedingte Verunreinigungen und/oder Monomere und/oder Oligomere aus dem Produkt zu entfernen. Während dieses Aufarbeitungsprozesses wird das Polycarbonat (I) zu keinem Zeitpunkt einer Temperatur >200°C ausgesetzt.

Die phosphorige Säure wird bevorzugt als wässrige Lösung im Verfahren zugegeben. Bevorzugt wird eine physikalische Vormischung aus dem Polycarbonat (I) mit der phosphorigen Säure beziehungsweise mit der wässrigen Lösung der phosphorigen Säure hergestellt. Ebenfalls bevorzugt ist, dass das derart hergestellte Zwischenprodukt vor der Aufheizung auf die Temperatur im Bereich von 240 bis 360°C, bevorzugt im Bereich von 250 bis 300°C, das heißt vor Aufheizung auf die Temperatur der Endgruppenpyrolyse, bei einer Temperatur unterhalb von 150°C getrocknet wird.

In einer weiteren speziellen Ausführungsform erfolgt die Entfernung des bei der Herstellung des Polycarbonats (I) verwendeten Lösungsmittels und die Bildung von Polycarbonat (II) aus Polycarbonat (I) nicht sukzessive, sondern simultan. In dieser Ausführungsform des erfindungsgemäßen Verfahrens zur Herstellung des erfindungsgemäßen Polycarbonats erfolgt wie oben beschrieben die Phosgenierung im Phasengrenzflächenverfahren oder in organischer Lösung von Bisphenol-A oder einer Mischung von mehreren, strukturell unterschiedlichen Diolen enthaltend Bisphenol-A in Anwesenheit eines Esters einer Hydroxybenzoesäure, wobei Polycarbonat (I) gebildet wird. Das Reaktionsprodukt aus dieser Herstellung enthaltend noch Lösungsmittel wird dann unter Zusatz von 0,01 bis 0,30 Gew.-%, bevorzugt 0,02 bis 0,15 Gew.-%, besonders bevorzugt 0,03 bis 0,07 Gew.-%, bezogen auf die Menge an Polycarbonat (I) an phosphoriger Säure (H₃PO₃) und unter Anlegen eines Unterdrucks einer Temperatur im Bereich von 240 bis 360°C, bevorzugt im Bereich von 250 bis 300°C für eine Zeit von 10 s bis 15 min, bevorzugt von 20 s bis 5 min ausgesetzt und dabei in einem einzigen Verfahrensschritt
a) einerseits die Lösungsmittel, bis zu einem Restgehalt von bevorzugt <0,1 Gew.-% entfernt und
b) andererseits aus den von einem Hydroxybenzoesäureester abgeleiteten Endgruppen von einer Hydroxybenzoesäure abgeleitete, als Endgruppen im Polycarbonat vorliegende Struktureinheiten mit freier COOH-Funktionalität, also Polycarbonat (II), gebildet.

Bei der Herstellung des Polycarbonat (II) aus dem Polycarbonat (I) wird bevorzugt ein Alken abgespalten.

Das abgespaltene Alken hat in der Regel die allgemeine Strukturformel R₃R₄C=CR₁R₂, wobei R₁, R₂, R₃ und R₄ die oben genannten Bedeutungen haben und den jeweiligen Resten R₁, R₂, R₃ und R₄ in dem Alkohol entsprechen, mit dem die bei der Herstellung des Polycarbonats (I) als Kettenabbrecher zum Einsatz kommenden Hydroxybenzoesäureester als Schutzgruppe verestert sind.

Die Herstellung von Polycarbonat (II) aus Polycarbonat (I) erfolgt bevorzugt in einem Verfahrensaggregat ausgewählt aus der Gruppe umfassend Einwellenextruder, gleichläufige oder gegenläufige Doppelwellenextruder, Planetwalzenextruder, kontinuierliche oder diskontinuierliche Innenkneter, Filmtruder, Strangverdampfer und Schaumverdampfer.

Als Produkt der Herstellung des Polycarbonats (II) resultiert eine Schmelze eines Carboxy-terminierten Polycarbonats mit einem Gehalt an Restlösungsmittel von bevorzugt <0,1 Gew.-%, welches in nachfolgenden optionalen Verfahrensschritten
a ) abgekühlt und dadurch verfestigt und weiter
b) optional granuliert und/oder
c) optional zu einem Pulver vermahlen wird.

Das Verfahrensprodukt enthält zumindest noch eine Teilmenge der im Verfahren eingesetzten phosphorigen Säure und/oder andere Phosphorverbindungen, die unter den Bedingungen der thermischen Behandlung des Polycarbonats in Anwesenheit der phosphorigen Säure im erfindungsgemäßen Verfahren daraus entstanden sind. Dabei kann es sich beispielsweise und bevorzugt um Phosphorsäure, Salze der phosphorigen Säure, Salze der Phosphorsäure sowie um Kondensate der phosphorigen Säure und/oder Phosphorsäure handeln.

Insofern betrifft die Erfindung auch thermoplastische Massen enthaltend ein Polycarbonat (II) gemäß der zuvor beschriebenen Merkmale und Vorzugsbereiche und mindestens eine Phosphorverbindung, ausgewählt aus der Gruppe bestehend aus phosphoriger Säure, Phosphorsäure, Salzen der phosphorigen Säure und Phosphorsäure sowie Kondensaten der phosphorigen Säure und Phosphorsäure, bevorzugt ausgewählt aus der Gruppe bestehend aus phosphoriger Säure und Salzen der phosphorigen Säure, jeweils in Summe in einer Menge von 0,01 bis 0,30 Gew.-%, bevorzugt 0,02 bis 0,15 Gew.-%, besonders bevorzugt 0,03 bis 0,07 Gew.-%.

Im Rahmen dieser Anmeldung werden die Begrifflichkeiten "Carboxy" und "Carboxyl" synonym verwendet und stehen für COOH-Gruppen.

Das erfindungsgemäße Polycarbonat wird im Folgenden als auch als aromatisches Polycarbonat oder als (aromatisches) Polycarbonat enthaltend (terminale) COOH-Endgruppen bezeichnet.

Durch ihre erfindungsgemäßen Merkmale, insbesondere die speziellen Verhältnisse von A zu B, von B2 zur Summe aus A und B2 sowie von B1 zur Summe aus A und B, und bedingt durch ihren geringen Gehalt an freiem Bisphenol-A, welche erstmalig durch das erfindungsgemäße Verfahren realisiert werden konnten, eignen sich die erfindungsgemäßen Polycarbonate besonders gut für die Herstellung von technisch verbesserten Copolymeren beziehungsweise von derartige Copolymere enthaltenden Formmassen.

Diese Copolymere beziehungsweise thermoplastischen Formmassen enthaltend solche Copolymere können erhalten werden in einem Verfahren umfassend die Schritte
a) Aufschmelzen einer Zusammensetzung enthaltend
   ein erfindungsgemäßes Polycarbonat (II) gemäß der zuvor beschriebenen Merkmale und Vorzugsbereiche und
   ein weiteres Polymer enthaltend mindestens eine Art funktioneller Gruppen ausgewählt aus Ester-, Hydroxy- und Epoxygruppen, bevorzugt enthaltend Epoxygruppen, weiter bevorzugt ein Polyolefin oder Vinyl(co)polymer, besonders bevorzugt Polymethylmethacrylat enthaltend von Glycidylmethacrylat abgeleitete Struktureinheiten, welche auf das Vinyl(co)polymer oder Polyolefin aufgepfropft oder in die Polymerkette (d. h. das Polymerrückgrat) des Vinyl(co)polymers oder Polyolefins eingebunden sind,
   durch Einbringen thermischer Energie und/oder mechanischer Scherung,
b) Vermischen und Dispergieren der verschiedenen Komponenten der Zusammensetzung mit- bzw. ineinander,
c) Verfestigen der Schmelze durch Abkühlen,
d) Granulieren des verfestigten aus den Schritten (a) bis (c) resultierenden Produktes,
wobei im Rahmen des Verfahrens in der Schmelze eine chemische Kopplungsreaktion der von einer Hydroxybenzoesäure abgeleiteten, als Endgruppen vorliegenden Struktureinheiten mit freier COOH-Funktionalität im Polycarbonat (II) mit dem weiteren Polymer enthaltend mindestens eine Art funktioneller Gruppen ausgewählt aus Ester-, Hydroxy- und Epoxygruppen, bevorzugt enthaltend Epoxygruppen, erfolgt.

Der Schritt (b) dieses Verfahrens erfolgt bevorzugt in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und ebenfalls bevorzugt bei einer Temperatur der Schmelze von 230 bis 300°C.

Insbesondere wurde überraschend gefunden, dass solche Copolymere beziehungsweise derartige Copolymere enthaltenden Formmassen, welche aus den erfindungsgemäßen Polycarbonaten (II) in dem zuvor beschriebenen erfindungsgemäßen Verfahren unter Verwendung eines mit Glycidylmethacrylat als Comonomer statistisch modifiziertes Polymethacrylat als Epoxygruppen enthaltendes Polymer hergestellt wurden, eine höhere Lichttransmission (Transparenz) aufweisen, als vergleichbare Copolymere beziehungsweise Copolymere enthaltende Formmassen hergestellt auf Basis eines vergleichbaren Polycarbonat, welches gemäß dem im Stand der Technik beschriebenen Verfahren (also ohne Zusatz von H₃PO₃ im Endgruppenpyrolyse-Schritt) hergestellt wurde.

Die erfindungsgemäßen Polycarbonate und Copolymere beziehungsweise derartige Copolymere enthaltenden Formmassen sind thermoplastisch und eignen sich insbesondere zur Verwendung als Additiv in thermoplastischen Polycarbonat-Zusammensetzungen, bevorzugt als Verträglichkeitsvermittler in thermoplastischen Polycarbonat-Blends.

Derartige erfindungsgemäßen thermoplastischen Polycarbonat-Zusammensetzungen und thermoplastischen Polycarbonat-Blends enthaltend die erfindungsgemäßen Copolymere oder Polycarbonate (II) eignen sich zur Herstellung von Formkörpern, beispielsweise im Spritzgussverfahren, für Anwendungen jeglicher Art. Insbesondere eignen sich solche thermoplastischen Polycarbonat-Zusammensetzungen und thermoplastischen Polycarbonat-Blends enthaltend die erfindungsgemäßen Polycarbonate und/oder solche erfindungsgemäßen Copolymere beziehungsweise derartige Copolymere enthaltenden Formmassen zur Herstellung von durchleuchtbaren Formteilen und Artikeln.

### Polycarbonat

Das erfindungsgemäße Polycarbonat enthält von Bisphenol-A abgeleitete Struktureinheiten und
A) von einer Hydroxybenzoesäure abgeleitete, als Endgruppen vorliegende Struktureinheiten mit freier COOH-Funktionalität (auch als COOH- oder dazu synonym als Carboxy- oder Carboxyl-Endgruppen bezeichnet) und
B) optional von einer Hydroxybenzoesäure abgeleitete Struktureinheiten,
   wobei Komponente B) ausgewählt ist aus mindestens einem Vertreter aus
   B1) von einer Hydroxybenzoesäure abgeleiteten, als Endgruppen vorliegenden Struktureinheiten mit veresterter COOH-Funktionalität,
      und
   B2) von einer Hydroxybenzoesäure abgeleiteten Struktureinheiten, welche in der Polymer-Kette über eine Ester-Gruppe (= B2-a) und/oder Säureanhydrid-Gruppe (= B2-b) eingebaut vorliegen,
      wobei der Gehalt an freiem Bisphenol A in dem Polycarbonat bei maximal 50 ppm, bevorzugt maximal 20 ppm, besonders bevorzugt maximal 10 ppm liegt und
      wobei für den Fall, dass Komponente B enthalten ist, das Verhältnis der molaren Menge von Komponente B1 zur Summe der molaren Mengen von Komponenten A und B bei maximal 0,07, bevorzugt bei maximal 0,05, weiter bevorzugt bei maximal 0,02, besonders bevorzugt bei maximal 0,01 liegt.

Bei der Berechnung des Verhältnisses der molaren Mengen von Komponenten A und B wird als molare Menge von Komponente B die Summe der molaren Mengen von Komponenten B1, B2-a und B2-b verwendet. Bei der Berechnung des Verhältnisses der molaren Mengen von Komponenten B2 zur Summe der molaren Mengen von Komponenten A und B2 wird als molare Menge von Komponente B2 die Summe der molaren Mengen von B2-a und B2-b verwendet.

Bevorzugt weisen die erfindungsgemäßen Polycarbonate eine Säurezahl von mindestens 0,3 mg Kaliumhydroxid (KOH)/g, weiter bevorzugt mindestens 0,5 mg Kaliumhydroxid (KOH)/g, am meisten bevorzugt mindestens 1,0 mg KOH/g, jeweils bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur, auf.

Bevorzugt weisen die erfindungsgemäßen Polycarbonate eine Säurezahl im Bereich von 0,3 bis 30 mg Kaliumhydroxid (KOH)/g , besonders bevorzugt im Bereich von 0,5 bis 20 mg Kaliumhydroxid (KOH)/g, am meisten bevorzugt im Bereich von 1,0 bis 10 mg Kaliumhydroxid (KOH)/g, jeweils bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur, auf.

Das zu untersuchende Polymer wird zur Bestimmung der Säurezahl in einer Konzentration von 10 g/L in 50 ml Dichlormethan bei Raumtemperatur gelöst. Vor der potentiometrischen Titration mit 0,1 N ethanolischer KOH werden der Probenlösung 5 ml Ethanol zugegeben.

Als Hydroxybenzoesäuren kommen sowohl Hydroxybenzoesäuren mit der Carbonsäuregruppe in para, meta- oder ortho-Stellung zur phenolischen OH-Gruppe in Frage. Bevorzugt sind Hydroxybenzoesäuren mit der Carbonsäuregruppe in para-Stellung zur phenolischen OH-Gruppe. Diese können an den freien aromatischen Ringpositionen einfach oder mehrfach mit C₁-C₁₀ Alkyl-, Aryl- oder Alkylaryl-Resten, bevorzugt mit C₁-C₄ Alkylresten, besonders bevorzugt mit Methyl, oder alternativ mit Halogen oder Ethergruppen, beispielsweise und bevorzugt mit Methoxy, substituiert sein.

Besonders bevorzugt handelt es sich bei den von einer Hydroxybenzoesäure abgeleiteten Struktureinheiten um von p-Hydroxybenzoesäure, welche keine weiteren Substituenten enthält, abgeleitete Struktureinheiten.

Bei den von einer Hydroxybenzoesäure abgeleiteten, als Endgruppen vorliegenden Struktureinheiten mit veresterter COOH-Funktionalität gemäß Komponente B1 handelt es sich bevorzugt um Ester einer Hydroxybenzoesäure (bevorzugt p-Hydroxy-Benzoesäure), weiter bevorzugt verestert mit einem Alkohol der oben angegebenen Strukturformel (1).

Bevorzugt handelt es sich bei dem Alkohol um einen tertiären Alkohol, am meisten bevorzugt um tert.-Butanol.

Die Strukturen für die Komponenten A, B1 und B2 sind beispielhaft für die als Hydroxybenzoesäure besonders bevorzugte p-Hydroxybenzoesäure in den Formeln (2), (3), (4a) und (4b) dargestellt, wobei Formel (2) für Komponente A, Formel (3) für Komponente B1 (am Beispiel des besonders bevorzugten tert-Butylesters) und die Formeln (4a) und (4b) für die Komponente B2 stehen. Formel (4a) zeigt dabei die von einer Hydroxybenzoesäure abgeleitete Struktureinheit, welche in der Polymer-Kette über eine Ester-Gruppe (Komponente B2-a) eingebaut vorliegt. Formel (4b) zeigt die von einer Hydroxybenzoesäure abgeleitete Struktureinheit, welche in der Polymer-Kette über eine Säureanhydrid-Gruppe (Komponente B2-b) eingebaut vorliegt. Alle Strukturen enthalten von Bisphenol-A abgeleitete Struktureinheiten.

In den Formeln (2), (3), (4a) und (4b) stehen m und n jeweils für die Anzahl der in den Klammern dargestellten Monomereinheiten.

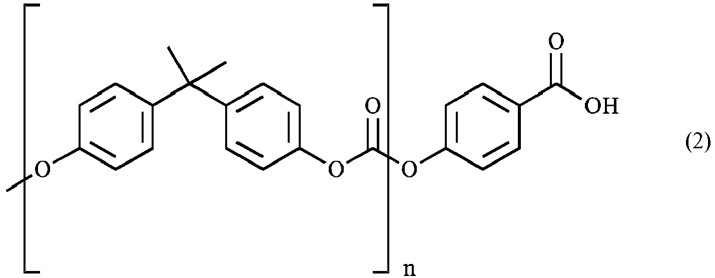

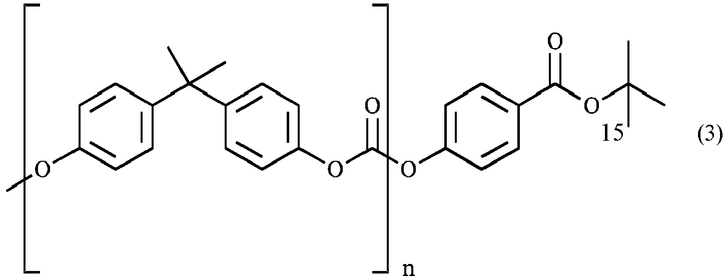

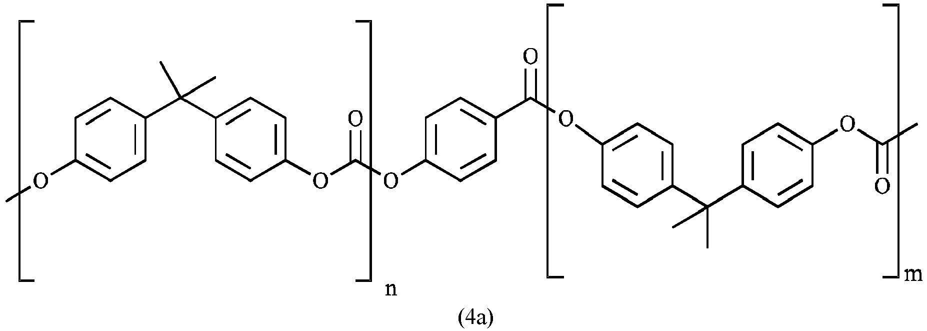

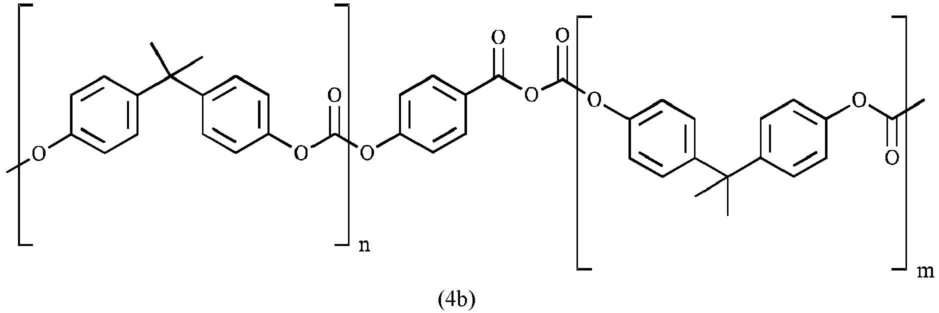

Der molare Anteil der Komponenten A, B1 sowie der beiden möglichen Strukturen für die Komponente B2, sowie die entsprechenden für die Erfindung relevanten molaren Verhältnisse dieser Komponenten werden über ¹H NMR-Spektroskopie bestimmt. Hierfür wird das Polycarbonat in deuteriertem Chloroform bei Raumtemperatur gelöst. Die verschiedenen, von einer Hydroxybenzoesäure abgeleiteten Struktureinheiten lassen sich anhand der NMR-Signale der zur Carboxy-Funktionalität bzw. zur derivatisierten Carboxy-Funktionalität orthoständigen aromatischen Protonen unterscheiden und auf Basis der intergierten Intensitäten dieser Signale die molaren Mengen bzw. Verhältnisse der verschiedenen Strukturen quantifizieren. Dabei handelt es sich im Falle der besonders bevorzugten p-Hydroxybenzoesäure aufgrund der Spin-Spin-Kopplung der ortho-ständigen mit den zur Carboxy-Funktionalität bzw. zur derivatisierten Carboxy-Funktionalität metaständigen aromatischen Protonen in allen Fällen um Dubletts. Für alle Komponenten A, B1 und B2 gehen die entsprechenden NMR-Signale jeweils auf zwei Protonen zurück, so dass sich aus den Verhältnissen der Intensitäten der entsprechenden NMR Signale direkt auf das entsprechende Verhältnis der molaren Anteile der verschiedenen Komponenten im Polycarbonat schließen lässt.

Im Spezialfall der besonders bevorzugten p-Hydroxybenzoesäure resonieren
- die Protonen in den von p-Hydroxybenzoesäure abgeleiteten Struktureinheiten gemäß Komponente A im Bereich um 8,14 ppm,
- die Protonen in den von p-Hydroxybenzoesäure abgeleiteten Struktureinheiten gemäß Komponente B1 im Falle des tert-Butyl-Esters gemäß Formel (2) im Bereich um 8,05 ppm,
- die Protonen in den von p-Hydroxybenzoesäure abgeleiteten Struktureinheiten gemäß Komponente B2-b (Formel 4b), welche in der Polymer-Kette über eine Säureanhydrid-Gruppe eingebaut vorliegen, im Bereich um 8,22 ppm und
- die Protonen in den von p-Hydroxybenzoesäure abgeleiteten Struktureinheiten gemäß Komponente B2-a (Formel 4a), welche in der Polymer-Kette über eine Ester-Gruppe eingebaut vorliegen, im Bereich um 8,26 ppm,
   wobei alle chemischen Verschiebungen in "parts per million" (ppm) relativ zu Trimethylsilan (TMS) als Referenz angegeben sind.

Insofern zeichnen sich bevorzugte Polycarbonate, bei denen es sich bei den von Hydroxybenzoesäure abgeleiteten Struktureinheiten gemäß Komponenten A, B1 und B2 in allen Fällen um von p-Hydroxybenzoesäure abgeleitete Struktureinheiten und bei den von einer Hydroxybenzoesäure abgeleiteten, als Endgruppen vorliegenden Struktureinheiten mit veresterter COOH-Funktionalität gemäß Komponente B1 um von tert.-Butyl-4-Hydroxybenzoat abgeleitete Struktureinheiten gemäß Formel (2) handelt, dadurch aus, dass in ihrem ¹H NMR-Spektrum, welches in einer Lösung des Polycarbonats in deuteriertem Chloroform bei Raumtemperatur gemessen wurde, das Verhältnis der integrierten Intensität des Dublett-Signals im Bereich um 8,05 ppm zur Summe der integrierten Intensitäten der Dublett-Signale in den Bereichen um 8,14 ppm,um 8,05 ppm, um 8,22 ppm und um 8,26 ppm bei maximal 0,07, bevorzugt bei maximal 0,05, besonders bevorzugt bei maximal 0,02, am meisten bevorzugt bei maximal 0,01 liegt, wobei die chemischen Verschiebungen jeweils gegen Tetramethylsilan (TMS) referenziert sind.

Weiterhin zeichnen sich die erfindungsgemäßen Polycarbonate dadurch aus, dass das Verhältnis der integrierten Intensität des ¹H NMR Dublett-Signals im Bereich um 8,14 ppm zur Summe der integrierten Intensitäten der Dublett-Signale in den Bereichen um 8,05 ppm, 8,22 ppm und 8,26 ppm bei bevorzugt mindestens 8, besonders bevorzugt mindestens 10, weiter bevorzugt mindestens 12, am meisten bevorzugt mindestens 25 liegt, wobei die chemischen Verschiebungen jeweils gegen Tetramethylsilan (TMS) referenziert sind.

Weiterhin zeichnen sich diese erfindungsgemäßen Polycarbonate bevorzugt dadurch aus, dass in ihrem ¹H NMR-Spektrum, welches in einer Lösung des Polycarbonats in deuteriertem Chloroform bei Raumtemperatur gemessen wurde, das Verhältnis der Summe der integrierten Intensitäten der Dublett-Signale in den Bereichen um 8,22 ppm und 8,26 ppm zur Summe der integrierten Intensitäten der Dublett-Signale in den Bereichen um 8,14 ppm, 8,22 ppm und 8,26 ppm bei bevorzugt maximal 0,12, weiter bevorzugt bei maximal 0,10, besonders bevorzugt bei maximal 0,08 und am meisten bevorzugt maximal 0,03 liegt, wobei die chemischen Verschiebungen jeweils gegen Tetramethylsilan (TMS) referenziert sind.

In einer bevorzugten Ausführungsform enthält das Polycarbonat weiterhin als Komponente C von Monophenolen, welche keine Carboxy- oder Carboxyderivat-Funktionalitäten enthalten, abgeleitete Struktureinheiten als Endgruppen. Bevorzugt handelt es sich bei den Monophenolen, welche keine Carboxy- oder Carboxyderivat-Funktionalitäten enthalten, von denen Komponente C abgeleitet ist, um Phenol oder ein- oder mehrfach Alkyl-, Aryl-, Alkylaryl- und/oder Halogen-substituierte Phenole, besonders bevorzugt um Phenol oder C₁- bis C₁₂-Alkylphenole, weiter bevorzugt um Phenol oder p-tert.-Butylphenol, am meisten bevorzugt um p-tert.-Butylphenol.

Eingesetzt werden können weiterhin beispielsweise p-Chlorphenol, 2,4,6-Tribromphenol, 4-(2,4,4-Trimethylpentyl)phenol, 4-(1,1,3,3-Tetramethylbutyl)phenol 3,5-Di-tert.-Butylphenol, p-iso-Octylphenol, p-tert.-Octylphenol, p-Dodecylphenol und 4-(3,6-Dimethyl-3-heptyl)-phenol.

Bei der Herstellung der erfindungsgemäßen Polycarbonate werden die hier erwähnten Monophenole, welche keine Carboxy- oder Carboxyderivat-Funktionalitäten enthalten, in einer bevorzugten Ausführungsform als weitere Kettenabbrecher eingesetzt.

Es können auch Mischungen mehrerer Monophenole, die keine Carboxy- oder Carboxyderivat-Funktionalitäten enthalten, als Kettenabbrecher eingesetzt werden.

Weiter bevorzugt liegt Komponente C in dem erfindungsgemäßen Polycarbonat in einem molaren Anteil, bezogen auf in Summe 100 mol-% der molaren Anteile der Komponenten A, B1, B2, das heißt der Summe der molaren Anteile von B2-a und B2-b, und C, von 50 bis 90 mol-%, besonders bevorzugt 60 bis 80 mol-%, am meisten bevorzugt 65 bis 75 mol-% vor. Mit diesen Anteilen kann in der Verwendung der erfindungsgemäßen Polycarbonate zur Herstellung von Copolymeren einerseits eine ausreichend hohe Ausbeute an Copolymerbildung realisiert werden, andererseits werden unerwünschte Vernetzungsreaktionen vermieden, wie weiter unten nochmals erläutert wird.

Auch die Menge an Komponente C in dem Polycarbonat sowie dessen molarer Anteil, bezogen auf in Summe 100 mol-% der molaren Anteile der Komponenten A, B1, B2 und C können ¹H NMRspektroskopisch quantifiziert werden. Im besonders bevorzugten Fall, in dem Komponente C von p-tert.-Butylphenol abgeleitete Struktureinheiten sind, eignet sich dafür beispielsweise insbesondere das NMR-Signal der drei Methylgruppen im tert.-Butyl-Rest in den von p-tert.-Butylphenol abgeleiteten, als Endgruppe vorliegenden Struktureinheiten. Es handelt sich hierbei um ein Singulett bei einer chemischen Verschiebung im Bereich um 1,32 ppm, referenziert gegen Trimethylsilan, welches neun Protonen zugeordnet ist.

Die erfindungsgemäßen Polycarbonate können
als Komponente A auch mehrere, von strukturell unterschiedlichen Hydroxybenzoesäuren abgeleitete, als Endgruppen vorliegende Struktureinheiten mit freier COOH-Funktionalität,
als Komponente B1 auch mehrere unterschiedliche, als Endgruppen vorliegende Struktureinheiten mit veresterter COOH-Funktionalität, welche sich sowohl in der strukturellen Natur der Hydroxybenzoesäure als auch in der strukturellen Natur des zur Ausbildung des Esters eingesetzten tertiären Alkohols unterscheiden können,
als Komponente B2 auch mehrere, von strukturell unterschiedlichen Hydroxybenzoesäuren abgeleitete Struktureinheiten, welche in der Polymer-Kette über eine Ester- oder Säureanhydrid-Gruppe eingebaut vorliegen
   und/oder
als Komponente C mehrere, von Monophenolen, welche keine Carboxy- oder Carboxyderivat-Funktionalitäten enthalten, abgeleitete Struktureinheiten als Endgruppen enthalten.

In diesem Fall gilt für alle in dieser Erfindung genannten Mengenverhältnis-Bereiche dieser Struktureinheiten, dass dort als molare Mengen der Komponenten A, B1, B2 und C jeweils die Summen aller molaren Mengen der strukturell unterschiedlichen Komponenten A, B1, B2 und C zur Berechnung der entsprechenden Verhältnisse herangezogen werden.

Die erfindungsgemäßen Polycarbonate weisen bevorzugt ein gewichtsgemitteltes Molekulargewicht M_{w} von 5.000 bis 40.000 g/mol, weiter bevorzugt von 7.000 bis 35.000 g/mol, besonders bevorzugt von 10.000 bis 33.000 g/mol auf, gemessen durch GPC (Gelpermeationschromatographie) kalibriert gegen Bisphenol A-Polycarbonat Standards unter Verwendung von Dichlormethan als Lösungsmittel. Die Kalibrierung erfolgt mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Für die Verwendung des erfindungsgemäßen Polycarbonats zur Herstellung von Copolymeren weist das erfindungsgemäße Polycarbonat bevorzugt ein gewichtsgemitteltes Molekulargewicht M_{w}, gemessen durch GPC (Gelpermeationschromatographie) bei Raumtemperatur in Methylenchlorid mit BPA-Polycarbonat-Standard), von 5.000 bis 30.000 g/mol, weiter bevorzugt von 7.000 bis 25.000 g/mol, besonders bevorzugt von 10.000 bis 20.000 g/mol auf.

Für die Verwendung des erfindungsgemäßen Polycarbonats als Formmasse zur Herstellung von Formteilen oder als Bestandteil einer Formmasse zur Herstellung von Formteilen weist das erfindungsgemäße Polycarbonat bevorzugt ein gewichtsgemitteltes Molekulargewicht M_{w}, gemessen durch GPC (Gelpermeationschromatographie) bei Raumtemperatur in Methlylenchlorid mit BPA-Polycarbonat-Standard), von 18.000 bis 40.000 g/mol, weiter bevorzugt von 20.000 bis 35.000 g/mol, besonders bevorzugt von 24.000 bis 33.000 g/mol auf.

Kommt eine Mischung mehrerer Polycarbonate mit unterschiedlicher individueller Säurezahl, unterschiedlichem Verhältnis von A/B, unterschiedlichem Verhältnis von B2/(A+B2), unterschiedlichem Verhältnis von B1/(A+B) und/oder unterschiedlichem individuellen gewichtsgemittelten Molekulargewicht M_{w} zum Einsatz, so gilt, dass diese Mischung eine Säurezahl, ein Verhältnis von A/B, ein Verhältnis von B2/(A+B2), ein Verhältnis von B1/(A+B) bzw. ein gewichtsgemitteltes Molekulargewicht M_{w} in einem der oben genannten (Vorzugs)Bereiche aufweist.

Die Herstellung von Polycarbonaten enthaltend eingebaut von Bisphenol-A abgeleitete Struktureinheiten (im Rahmen dieser Erfindung synonym auch als Bisphenol-A basiertes Polycarbonat oder aromatisches Polycarbonat bezeichnet) im Allgemeinen ist literaturbekannt (zur Herstellung aromatischer Polycarbonate siehe beispielsweise Schnell, "Chemistry and Physics of Polycarbonates", Interscience Publishers, 1964).

Die Herstellung der erfindungsgemäßen Polycarbonate enthaltend terminale COOH-Gruppen erfolgt in zwei Schritten. In einem ersten Schritt wird ein Polycarbonat enthaltend von Bisphenol-A abgeleitete Struktureinheiten und von einem Hydroxybenzoesäureester abgeleitete Endgruppen bereitgestellt. Dieses Polycarbonat wird bevorzugt in ähnlicher Weise hergestellt wie in US 4,853,458 B beschrieben durch Umsetzung von Bisphenol-A oder einer Bisphenol-A enthaltenden Mischung von Diphenolen (aromatischen Diolen) mit Phosgen, nach dem Phasengrenzflächenverfahren unter Verwendung mindestens eines wie oben beschriebenen Esters einer Hydroxybenzoesäure oder einer Mischung enthaltend mindestens einen Ester einer Hydroxybenzoesäure und mindestens ein Monophenol, welches keine Carboxy- oder Carboxyderivat-Funktionalität enthält, als monophenolischen Kettenabbrecher beziehungsweise als Kettenabbrecher-Mischung. Kommen mehrere strukturell unterschiedliche Hydroxybenzoesäureester in der Kettenabbrecher-Mischung zum Einsatz, so können sich diese Ester sowohl in der Natur der Hydroxybenzoesäure als auch in der Natur des zur Ausbildung des Esters eingesetzten Alkohols unterscheiden. In einem zweiten Schritt erfolgt die Freisetzung der terminalen COOH Gruppen (COOH-Funktionalität).

Werden in der Kettenabbrecher-Mischung monophenolische Kettenabbrecher, die keine Carboxy- oder Carboxyderivat-Funktionalitäten enthalten, eingesetzt, so enthält das so hergestellte aromatische Polycarbonat neben den Komponenten A, B1 und B2 also weiterhin als Komponente C von den monophenolischen Kettenabbrechern abgeleitete Struktureinheiten, am meisten bevorzugt abgeleitet von p-tert.-Butylphenol.

Bei der Herstellung der erfindungsgemäßen Polycarbonate werden die monophenolischen Kettenabbrecher, die keine Carboxy- oder Carboxyderivat-Funktionalitäten enthalten, in der Kettenabbrecher-Mischung, bestehend aus diesen monophenolischen Kettenabbrechern, die keine Carboxy- oder Carboxyderivat-Funktionalitäten enthalten, und den als Kettenabbrecher eingesetzten Estern einer Hydroxybenzoesäure, bevorzugt in einem molaren Anteil, bezogen auf in Summe 100 mol-% der molaren Anteile der Komponenten A, B1, B2 und C, von 50 bis 90 mol-%, bevorzugt 60 bis 80 mol-%, besonders bevorzugt 65 bis 75 mol-% eingesetzt. Die sich ergebende jeweilige Differenz zu 100 mol-% entspricht dann dem Anteil des Esters oder des Gemisches von verschiedenen Estern von einer oder mehreren Hydroxybenzoesäuren. Dieser liegt also bei bevorzugt 10 bis 50 mol-%, besonders bevorzugt 20 bis 40 mol-%, am meisten bevorzugt 25 bis 35 mol-%, bezogen auf in Summe 100 mol-% der molaren Anteile der Komponenten A, B1, B2 und C.

Ist der Gehalt an in der Kettenabbrecher-Mischung eingesetzten Hydroxybenzoesäureestern größer als die angegebenen bevorzugten Bereiche, so kann es bei der erfindungsgemäßen Verwendung der Polycarbonate in einem Verfahren zur Herstellung von Copolymeren zu unerwünschten Vernetzungsreaktionen bei der Reaktivcompoundierung mit dem Blendpartner kommen, so dass die thermoplastische Verarbeitbarkeit der Reaktivmischung nicht mehr gegeben ist. Ist der Gehalt an in der Kettenabbrecher-Mischung eingesetzten Estern einer Hydroxybenzoesäure kleiner als die angegebenen bevorzugten Bereiche, so kann die gewünschte Copolymerbildung zwischen dem Polycarbonat und dem Blendpartner nicht mehr in einer zur Erzielung des angestrebten technischen Effektes ausreichenden Ausbeute stattfinden.

Das Molekulargewicht der so hergestellten Polycarbonate kann in für den Fachmann bekannter Art und Weise durch Variation des Verhältnisses der monophenolischen Kettenabbrecher zu Diphenolen in weiten Bereichen zielgenau eingestellt werden.

Durch das Einsatzmengen-Verhältnis in der Kettenabbrecher-Mischung der Hydroxybenzoesäurester zu den optional eingesetzten monophenolischen Kettenabbrechern, die keine Carboxy- oder Carboxyderivat-Funktionalitäten enthalten, lässt sich der Gehalt an COOH-Gruppen im erfindungsgemäßen Polycarbonat und somit auch dessen Säurezahl über breite Bereiche zielgesteuert einstellen.

Aus den Polycarbonaten mit von Hydroxybenzoesäureestern abgeleiteten Endgruppen werden die terminalen COOH-Gruppen (d.h. von Hydroxybenzoesäuren abgeleitete Endgruppen) durch thermische Endgruppenpyrolyse freigesetzt.

Das erfindungsgemäße Verfahren zur Freisetzung der terminalen COOH-Gruppen ist die thermische Endgruppenpyrolyse unter Zusatz von 0,01 bis 0,30 Gew.-%, bevorzugt 0,02 bis 0,15 Gew.-%, besonders bevorzugt 0,03 bis 0,07 Gew.-% von phosphoriger Säure H₃PO₃, bezogen auf die Menge der Polycarbonat-Vorstufe (I) enthaltend von Hydroxybenzoesäureestern abgeleitete Endgruppen, unter Anliegen eines Unterdrucks bei einer Temperatur im Bereich von 240 bis 360°C, bevorzugt im Bereich von 250 bis 300°C für eine Zeit von 10 s bis 15 min, bevorzugt von 20 s bis 5 min.

Unter diesen thermischen Bedingungen wird das Polycarbonat-Rückgrat (also die Polycarbonat-Polymerkette) nicht maßgeblich degeneriert und unerwünschte Nebenreaktionen minimiert. Komponente C bleibt bei der thermischen Endgruppenpyrolyse im Allgemeinen unbeeinflusst.

In Kombination mit Bisphenol-A (im Folgenden auch als neben Bisphenol-A genannt) sind weitere Diphenole zur Herstellung der erfindungsgemäßen Polycarbonate vorzugsweise solche aromatischen Diphenole der Formel (5) 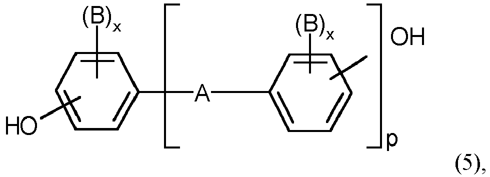 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (6) oder (7) 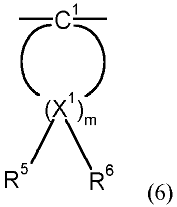 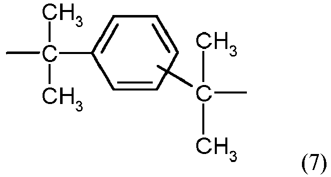
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole neben Bisphenol A sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind neben Bisphenol-A auch 4,4'-Dihydroxydiphenyl, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Wird bei der Herstellung der erfindungsgemäßen Polycarbonate eine Bisphenol-A enthaltende Mischung verschiedener der zuvor beschriebenen Diphenole eingesetzt, so enthält diese Mischung das Bisphenol-A, bezogen auf die Summe aller eingesetzten Diphenole, in einer Einsatzmenge von mindestens 5 mol-%, bevorzugt mindestens 50 mol-%, weiter bevorzugt mindestens 75 mol-%, insbesondere bevorzugt mindestens 90 mol-%. Am meisten bevorzugt ist die Verwendung von reinem Bisphenol-A als Diphenol in der Polycarbonatherstellung.

Es können die neben Bisphenol-A zum Einsatz kommenden Diphenole einzeln oder als beliebige Mischungen eingesetzt werden. Die Diphenole sind literaturbekannt oder nach literaturbekannten Verfahren erhältlich.

Die erfindungsgemäßen Polycarbonate können in bekannter Weise verzweigt sein, und zwar vorzugsweise durch den Einbau von 0,01 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Bevorzugt handelt es sich bei dem erfindungsgemäßen Polycarbonat enthaltend COOH-Endgruppen um ein lineares Polycarbonat.

### Weiteres Polymer zur Herstellung eines Copolymers

Das erfindungsgemäße Polycarbonat enthaltend COOH-Endgruppen kann verwendet werden zur Herstellung eines Copolymers oder einer Copolymer enthaltenden thermoplastischen Formmasse. Bevorzugt handelt es sich bei dem Copolymer um ein Blockcopolymer, weiter bevorzugt um ein Blockcopolymer mit einem Vinyl(co)polymer oder Polyolefin.

Geeignete Polymere, mit denen das erfindungsgemäße Polycarbonat ein Copolymer bilden kann, weisen mindestens eine Art funktioneller Gruppen ausgewählt aus Ester-, Hydroxy- und Epoxygruppen auf. Besonders bevorzugt enthalten die Polymere Epoxy-Gruppen.

Im Falle einer Estergruppe als solche funktionelle Gruppe kann diese bei den Polymeren sowohl Bestandteil der Polymerkette (Polymerrückgrats), wie in einem Polyester der Fall, als auch eine nicht am Aufbau der Polymerkette direkt beteiligte funktionelle Gruppe eines Monomers, wie bei einem Acrylatpolymer der Fall, sein.

Es können auch Mischungen verschiedener solcher Polymere eingesetzt werden. Dabei können die Mischungen jeweils Polymere mit gleichartigen funktionellen Gruppen oder Polymere mit unterschiedlichen funktionellen Gruppen umfassen.

Bevorzugt ist das weitere Polymer ausgewählt aus zuvor genannte (bevorzugte) funktionelle Gruppen enthaltenden Vinyl(co)polymeren, Polyolefinen und Polyestern, weiter bevorzugt Vinyl(co)polymeren und Polyolefinen und besonders bevorzugt Vinyl(co)polymeren.

Bei den erfindungsgemäßen funktionelle Gruppen enthaltenden Vinyl(co)polymeren handelt es sich bevorzugt um (Co)Polymerisate von mindestens einem Monomeren aus der Gruppe der (Meth)-Acrylsäure-(C₁ bis C₈)-Alkylester (wie beispielsweise Methylmethacrylat, n-Butylacrylat, tert.-Butylacrylat), ungesättigte Carbonsäuren und Carbonsäureanhydride, Vinylaromaten (wie beispielsweise Styrol, α-Methylstyrol), Vinylcyaniden (ungesättigte Nitrile wie beispielsweise Acrylnitril und Methacrylnitril) und Olefinen (wie Ethylen) mit weiteren Vinylmonomeren enthaltend Ester-, Hydroxy-, Carboxy-, Carbonsäureanhydrid- oder Epoxygruppen, bevorzugt Vinylmonomeren enthaltend Epoxygruppen, besonderes bevorzugt Glycidylmethacrylat.

Epoxygruppen werden beispielsweise und bevorzugt eingebracht, indem als weiteres Monomer Glycidylmethacrylat zusammen mit dem anderen Monomer oder den anderen Monomeren copolymerisiert wird.

Diese (Co)Polymere sind harzartig und kautschukfrei. Derartige (Co)Polymere sind bekannt und lassen sich durch radikalische Polymerisation, insbesondere durch Emulsions-, Suspensions-, Lösungs- oder Massepolymerisation herstellen.

Besonders geeignete Vinyl(co)polymere enthalten Struktureinheiten abgeleitet von Glycidylmethacrylat.

Ein besonders geeignetes Vinyl(co)polymer ist ein Copolymer aus Methylmethacrylat und Glycidylmethacrylat.

Weiterhin besonders geeignete Vinyl(co)polymere sind Styrol-Acrylnitril-Glycidylmethacrylat-Terpolymere sowie Styrol-Methylmethacrylat-Glycidylmethacrylat-Terpolymere.

Der Gehalt an Glycidylmethacrylat in den besonders geeignete Vinyl(co)polymeren liegt bevorzugt bei 0,5 bis 10 Gew.-%, weiter bevorzugt bei 0,7 bis 7 Gew.-%, besonders bevorzugt bei 1 bis 5 Gew.-%.

In Frage kommende Polyester können linear oder verzweigt sein. Bevorzugt sind die Polyester linear. Es können aliphatische oder aromatische Polyester sein. In bevorzugter Ausführungsform sind die Polyester aromatisch, weiter bevorzugt handelt es sich um Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Auch bevorzugt handelt es sich bei den weiteren Polymeren um funktionelle Gruppen enthaltende Polyolefine, bevorzugt Epoxy-Gruppen enthaltende Polyolefine, besonders bevorzugt Polyolefine enthaltend von Glycidylmethacrylat abgeleitete Struktureinheiten.

Polyolefine werden durch Kettenpolymerisation, beispielsweise durch radikalische oder anionische Polymerisation, hergestellt. Als Monomere werden Alkene eingesetzt. Eine alternative Bezeichnung für Alkene ist Olefine. Die Monomere können einzeln oder als Mischung verschiedener Monomere polymerisiert werden. Bevorzugte Monomere sind Ethylen, Propylen, 1-Buten, Isobuten, 1-Penten, 1-Hepten, 1-Okten und 4-Methyl-1-Penten.

Die Polyolefine können teilkristallin oder amorph sowie linear oder verzweigt sein. Die Herstellung von Polyolefinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Monomerzusammensetzung, der Art der als Monomer eingesetzten Isomere, der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Funktionelle Gruppen werden beispielsweise in die Polyolefine eingebracht, indem wie oben beschrieben Vinylmonomere enthaltend die funktionelle Gruppe mit dem Olefin copolymerisiert werden, bevorzugt durch radikalische Polymerisation. Geeignete Vinylmonomere sind beispielsweise Glycidylmethacrylat und Methylmethcrylat.

Eine alternative Herstellungsmöglichkeit ist ausgehend von einem Polyolefin die radikalische Pfropfung von funktionelle Gruppen enthaltenden Vinylmonomeren wie beispielsweise Glycicylmethacrylat.

Die weiteren Polymere haben mittlere Molekulargewichte (Gewichtsmittel M_{w}, gemessen durch GPC (Gelpermeationschromatographie) gegen Polystyrol als Standard) von bevorzugt 3.000 bis 300.000 g/mol, weiter bevorzugt von 10.000 bis 200.000 g/mol, besonders bevorzugt von 20.000 bis 100.000 g/mol.

Das Lösungsmittel für die GPC Messung wird so ausgewählt, dass es das weitere Polymer, bevorzugt bei Raumtemperatur, gut löst. Ist eine Löslichkeit in dem ausgewählten Lösungsmittel bei Raumtemperatur gegeben, so wird die GPC bei Raumtemperatur durchgeführt.

Ein geeignetes Lösungsmittel für die bevorzugten Vinyl(co)polymere wie beispielsweise Copolymere aus Methylmethacrylat und Glycidylmethacrylat, Styrol-Acrylnitril-Glycidylmethacrylat-Terpolymere sowie Styrol-Methylmethacrylat-Glycidylmethacrylat-Terpolymere ist beispielsweise Tetrahydrofuran. Ein geeignetes Lösungsmittel für von Glycidylmethacrylat abgeleitete Struktureinheiten enthaltenden Polyolefine ist beispielsweise ortho-Dichlorbenzol oder 1,2-Dichlorethan. Eine ausreichende Löslichkeit erfordert hier oft eine erhöhte Temperatur beispielsweise 40°C, 60°C, 80°C, 100°C oder 120°C. In diesem Fall wird die GPC bei der Temperatur durchgeführt, die zur Erzielung einer für die GPC ausreichenden Löslichkeit erforderlich ist. Erfordert das Polyolefin zur Erzielung einer für die GPC ausreichenden Löslichkeit eine Temperatur oberhalb von 40°C, so kommt bevorzugt ortho-Dichlorbenzol als Lösungsmittel zum Einsatz.

### Herstellung von Copolymeren und Copolymere enthaltenden Formmassen aus den erfindungsgemäßen Polycarbonaten

Aus den erfindungsgemäßen Polycarbonaten enthaltend COOH-Endgruppen und den zuvor beschriebenen weiteren Polymeren können Copolymere enthaltend mindestens einen Polycarbonat-Block hergestellt werden, bevorzugt Blockcopolymere mit Vinyl(co)polymeren oder Polyolefinen, am meisten bevorzugt Blockcopolymere mit PMMA. Solche Copolymere sind ein weiterer Gegenstand der vorliegenden Erfindung.

Die Herstellung solcher Blockcopolmere oder Formmassen erfolgt bevorzugt in einem Verfahren umfassend die Schritte
a) Aufschmelzen einer Zusammensetzung enthaltend
   ein erfindungsgemäßes Polycarbonat (II) und
   ein weiteres Polymer enthaltend Struktureinheiten abgeleitet von einem weiteren Polymer enthaltend mindestens eine Art funktioneller Gruppen ausgewählt aus Ester-, Hydroxy- und Epoxygruppen,
   bevorzugt enthaltend Epoxygruppen, bevorzugt ein Vinyl(co)polymer oder Polyolefin enthaltend von Glycidylmethacrylat abgeleitete Struktureinheiten, welche auf das Vinyl(co)polymer oder Polyolefin aufgepfropft oder in die Polymerkette des Vinyl(co)polymers oder Polyolefins eingebunden sind,
   durch Einbringen thermischer Energie und/oder mechanischer Scherung,
b) Vermischen und Dispergieren der verschiedenen Komponenten der Zusammensetzung mit- bzw. ineinander,
c) Verfestigen der Schmelze durch Abkühlen,
d) Granulieren des verfestigten aus den Schritten (a) bis (c) resultierenden Produktes,
wobei im Rahmen des Verfahrens in der Schmelze eine chemische Kopplungsreaktion der von einer Hydroxybenzoesäure abgeleiteten, als Endgruppen vorliegenden Struktureinheiten mit freier COOH-Funktionalität im Polycarbonat (II) mit dem Epoxygruppen enthaltenden Polymer erfolgt.

Der Schritt (b) erfolgt in diesem Verfahren bevorzugt in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und ebenfalls bevorzugt bei einer Temperatur der Schmelze von 230 bis 300°C.

### Weitere Komponenten zur Herstellung einer thermoplastischen Formmasse

Sowohl die erfindungsgemäßen Polycarbonate enthaltend COOH-Endgruppen, erfindungsgemäße derartige Polycarbonate enthaltende thermoplastische Massen als auch aus solchen Polycarbonaten oder Formmassen hergestellte erfindungsgemäße Copolymere sowie derartige Copolymere enthaltenden erfindungsgemäßen Formmassen können als Bestandteil einer thermoplastischen Formmasse, bevorzugt enthaltend ein oder mehrere weitere Polymere, eingesetzt werden. Insbesondere eignen sich die erfindungsgemäßen Copolymere sowie solche Copolymere enthaltenden erfindungsgemäßen Formmassen als Bestandteil in thermoplastischen Formmassen enthaltend Polycarbonat, bevorzugt aromatisches Polycarbonat als weiteres Polymer. Weiterhin eignen sich die erfindungsgemäßen Copolymere sowie solche Copolymere enthaltenden erfindungsgemäßen Formmassen als Bestandteil in thermoplastischen Polymerblend-Formmassen enthaltend aromatisches Polycarbonat und mindestens ein weiteres Polymer mit ähnlicher Polarität zu dem Polymerblock, welcher in dem Copolymer mit dem Polycarbonat-Block verknüpft ist. Am stärksten bevorzugt eignen sich dieses Copolymere sowie solche Copolymere enthaltenden erfindungsgemäßen Formmassen als Bestandteil in thermoplastischen Polymerblend-Formmassen enthaltend aromatisches Polycarbonat und als weiteres Polymer dasselbe Polymer, welches als Polymerblock in dem Blockcopolymer mit dem erfindungsgemäßen Polycarbonat verknüpft ist.

Diese Formmassen können weitere Komponenten wie Polymeradditive, Prozesshilfsstoffe und/oder weitere polymere Komponenten enthalten, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Schlagzähigkeitsmodifikatoren (sowohl mit als auch ohne Kern-Schale-Struktur), polymeren Blendpartnern, Füll- und Verstärkungsstoffen sowie Farbstoffen und Pigmenten.

Bevorzugte polymere Blendpartner sind aromatisches Polycarbonat enthaltend keine COOH-Endgruppen, Polyester (beispielsweise und bevorzugt Polyethylenterephthalat und Polybutylenterephthalat), Vinyl(co)polymere und Polyolefine. Diese müssen im Gegensatz zu den für die Herstellung von Copolymeren eingesetzten Polymeren keine funktionellen Gruppen enthalten. Somit kommen beispielsweise auch Polystyrol, Polyolefine, Copolymere aus Ethylen und/oder Propylen und Acrylaten, Styrol-Acrylnitril-Copolymer, Styrol-Methylmethacrylat-Copolymer und Polymethylmethacrylat als bevorzugte polymere Blendpartner in Frage. Diese können sowohl kautschukfrei als auch kautschukhaltig sein. Letzteres gilt beispielsweise für Acrylnitril-Butadien-Styrol (ABS) oder Acrylnitril-Butylacrylat-Styrol (ASA)-Polymere.

Die oben genannten weiteren Komponenten werden in einem Anteil von in Summe 0 bis 40 Gew.-%, bevorzugt 0,1 bis 30 Gew.-%, weiter bevorzugt 0,2 bis 20 Gew.-%, bezogen auf die thermoplastische Zusammensetzung eingesetzt.

Zur Erzielung transparenter thermoplastischer Formmassen ist es in der Regel zweckmäßig bzw. technisch erforderlich, in deren Zusammensetzungen auf bestimmte weitere Komponenten wie beispielsweise Füll- und Verstärkungsstoffe, Schlagzähmodifikatoren und kautschukhaltige Blendpartner zu verzichten oder deren Konzentration sowie die Konzentration der sonstigen eingesetzten weiteren Komponenten auf deutlich niedrigere Gehalte als zuvor angegeben zu begrenzen.

### Herstellung von Formmassen enthaltend die erfindungsgemäßen Polycarbonate und/oder Copolymere sowie Herstellung von Formkörpern aus solchen Formmassen

Die erfindungsgemäßen thermoplastischen Formmassen können beispielsweise hergestellt werden, indem man die jeweiligen Bestandteile, also das erfindungsgemäße Polycarbonat beziehungsweise eine erfindungsgemäße thermoplastische Masse enthaltend ein derartiges erfindungsgemäßes Polycarbonat und/oder das erfindungsgemäße Copolymer beziehungsweise die ein derartiges Copolymer enthaltende erfindungsgemäße thermoplastische Formmasse und weitere polymere Komponenten, Polymeradditive und/oder Prozesshilfsstoffe (also die Zusammensetzung) bei Temperaturen von 220°C bis 320°C, bevorzugt 230 bis 300°C, besonders bevorzugt 240 bis 290°C, am meisten bevorzugt 250 bis 280°C miteinander in der Schmelze vermischt.

Das Vermischen kann in üblichen Aggregaten geschehen, wie beispielsweise in Einwellenextrudern, gleichläufigen oder gegenläufige Doppelwellenextrudern, Planetwalzenextrudern, Innenknetern oder kontinuierlichen oder diskontinuierlichen Co-Knetern. Darin werden die Zusammensetzungen zu Formmassen schmelzcompoundiert oder schmelzextrudiert. Dieser Prozess wird im Rahmen dieser Anmeldung allgemein als Compoundieren oder Schmelzecompoundieren bezeichnet. Unter Formmasse wird also das Produkt verstanden, das erhaltend wird, wenn die Bestandteile der Zusammensetzung schmelzecompoundiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile vollständig oder teilweise über den Haupteinzug eines Extruders dosiert und die restlichen Bestandteile vollständig oder teilweise über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in den Förderextruder einer Spritzgussmaschine zu dosieren, die erfindungsgemäße Formmasse dabei in dem Förderextruder herzustellen und durch entsprechenden Austrag der Formmasse in eine Spritzgussform direkt zu Formkörper zu verarbeiten (Compoundierungs- oder Reaktivcompoundierungsspritzguss).

Ein weiterer Gegenstand der vorliegenden Erfindung betrifft die Verwendung einer erfindungsgemäßen Zusammensetzung oder einer erfindungsgemäßen Formmasse zur Herstellung von Formkörpern, sowie ferner auch einen Formkörper, der aus einer erfindungsgemäßen Zusammensetzung oder aus einer erfindungsgemäßen Formmasse erhältlich ist oder eine solche Formmasse enthält.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Im Folgenden werden weitere Ausführungsformen der vorliegenden Erfindung aufgeführt.
1. Polycarbonat enthaltend von Bisphenol-A abgeleitete Struktureinheiten und
   A) von einer Hydroxybenzoesäure abgeleitete, als Endgruppen vorliegende Struktureinheiten mit freier COOH-Funktionalität und
   B) optional von einer Hydroxybenzoesäure abgeleitete Struktureinheiten,
      wobei Komponente B) ausgewählt ist aus mindestens einem Vertreter aus
      B1) von einer Hydroxybenzoesäure abgeleiteten, als Endgruppen vorliegenden Struktureinheiten mit veresterter COOH-Funktionalität,
         und
      B2) von einer Hydroxybenzoesäure abgeleiteten Struktureinheiten, welche über eine Ester- oder Säureanhydrid-Gruppe in der Polymer-Kette eingebaut vorliegen,
         wobei der Gehalt an freiem Bisphenol A in dem Polycarbonat bei maximal 50 ppm liegt und
         wobei für den Fall, dass Komponente B enthalten ist, das Verhältnis der molaren Menge von Komponente B1 zur Summe der molaren Mengen von Komponenten A und B bei maximal 0,07 liegt.
2. Polycarbonat gemäß Ausführungsform 1, wobei Komponente B enthalten ist.
3. Polycarbonat gemäß einer der Ausführungsformen 1 oder 2, wobei der Gehalt an freiem Bisphenol A in dem Polycarbonat bei maximal 20 ppm liegt.
4. Polycarbonat gemäß einer der Ausführungsformen 1 oder 2, wobei der Gehalt an freiem Bisphenol A in dem Polycarbonat bei maximal 10 ppm liegt.
5. Polycarbonat gemäß einer der vorhergehenden Ausführungsformen, dadurch gekennzeichnet, dass das Verhältnis der molaren Menge von Komponente B2 zur Summe der molaren Mengen von Komponenten A und B2 bei 0,001 bis 0,25 liegt.
6. Polycarbonat gemäß einer der vorhergehenden Ausführungsformen, dadurch gekennzeichnet, dass das Verhältnis der molaren Menge von Komponente B2 zur Summe der molaren Mengen von Komponenten A und B2 bei maximal 0,12 liegt.
7. Polycarbonat gemäß einer der vorhergehenden Ausführungsformen, dadurch gekennzeichnet, dass das Verhältnis der molaren Menge von Komponente B2 zur Summe der molaren Mengen von Komponenten A und B2 bei maximal 0,08 liegt.
8. Polycarbonat gemäß einer der vorhergehenden Ausführungsformen, dadurch gekennzeichnet, dass das Verhältnis der molaren Menge von Komponente B2 zur Summe der molaren Mengen von Komponenten A und B2 bei maximal 0,03 liegt.
9. Polycarbonat gemäß einer der vorhergehenden Ausführungsformen, wobei das Verhältnis der molaren Menge von Komponente A zur molaren Menge von Komponente B bei mindestens 8 liegt.
10. Polycarbonat gemäß einer der vorhergehenden Ausführungsformen, wobei das Verhältnis der molaren Menge von Komponente A zur molaren Menge von Komponente B bei mindestens 12 liegt.
11. Polycarbonat gemäß einer der vorhergehenden Ausführungsformen, wobei das Verhältnis der molaren Menge von Komponente A zur molaren Menge von Komponente B bei mindestens 25 liegt.
12. Polycarbonat gemäß einer der vorhergehenden Ausführungsformen, weiterhin enthaltend
   C) von mindestens einer phenolischen Verbindung mit nur einer phenolischen OH-Funktionalität, welche keine Carboxy- oder Carboxyderivat-Funktionalität enthält, abgeleitete, als Endgruppe vorliegende Struktureinheiten,
   dadurch gekennzeichnet, dass Komponente C in dem Polycarbonat in einem molaren Anteil, bezogen auf in Summe 100 mol-% der molaren Anteile der Komponenten A, B1, B2 und C, von 50 bis 90 mol-% vorliegt.
13. Polycarbonat gemäß Ausführungsform 12, wobei die Komponente C in dem Polycarbonat in einem molaren Anteil, bezogen auf in Summe 100 mol-% der molaren Anteile der Komponenten A, B1, B2 und C, von 65 bis 75 mol-% vorliegt.
14. Polycarbonat gemäß einer der vorhergehenden Ausführungsformen, wobei das Polycarbonat gekennzeichnet ist durch eine Säurezahl im Bereich von 0,3 bis 30 mg Kaliumhydroxid (KOH)/g, bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur.
15. Polycarbonat gemäß Ausführungsform 14, wobei die Säurezahl 1,0 bis 10 mg Kaliumhydroxid (KOH)/g beträgt.
16. Polycarbonat gemäß einer der vorhergehenden Ausführungsformen, wobei das Verhältnis der molaren Menge von Komponente B1 zur Summe der molaren Mengen von Komponenten A und B bei maximal 0,05 liegt.
17. Polycarbonat gemäß einer der vorhergehenden Ausführungsformen, wobei das Verhältnis der molaren Menge von Komponente B1 zur Summe der molaren Mengen von Komponenten A und B bei maximal 0,01 liegt.
18. Verfahren zur Herstellung eines Polycarbonats (II), wobei
   ein Polycarbonat (I)
   in Gegenwart von 0,01 bis 0,30 Gew.-%, bezogen auf die Menge des Polycarbonats (I), an phosphoriger Säure H₃PO₃
   unter Anlegen eines Unterdrucks für 10 s bis 15 min,
   einer Temperatur im Bereich von 240 bis 360°C, ausgesetzt wird
   und das Polycarbonat (II) gebildet wird.
19. Verfahren zur Herstellung eines Polycarbonats (II) enthaltend von Bisphenol A abgeleitete Struktureinheiten und von einer Hydroxybenzoesäure abgeleitete Endgruppen mit freier COOH-Funktionalität, wobei
   ein Polycarbonat (I) enthaltend von Bisphenol A abgeleitete Struktureinheiten und von einem Hydroxybenzoesäureester abgeleitete Endgruppen
   in Gegenwart von 0,01 bis 0,30 Gew.-%, bezogen auf die Menge des Polycarbonats (I), an phosphoriger Säure H₃PO₃
   unter Anlegen eines Unterdrucks für 10 s bis 15 min,
   einer Temperatur im Bereich von 240 bis 360°C, ausgesetzt wird
   und dabei das Polycarbonat (II) gebildet wird.
20. Verfahren gemäß einer der Ausführungsformen 18 oder 19, wobei in einem vorhergehenden Schritt das Polycarbonat (I) hergestellt wird durch Phosgenierung im Phasengrenzflächenverfahren oder in organischer Lösung von Bisphenol-A oder einer Mischung von mehreren, strukturell unterschiedlichen Diolen enthaltend Bisphenol-A in Anwesenheit mindestens eines Esters einer Hydroxybenzoesäure oder einer Mischung enthaltend mindestens einen Ester einer Hydroxybenzoesäure und mindestens eine phenolische Verbindung mit nur einer phenolischen OH-Funktionalität, welche keine Carboxy- oder Carboxyderivat-Funktionalität enthält,
   als Kettenabbrecher beziehungsweise Kettenabbrecher-Mischung
      und wobei der mindestens eine Ester einer Hydroxybenzoesäure ein Ester einer Hydroxybenzoesäure verestert mit einem Alkohol der allgemeinen Strukturformel (1) 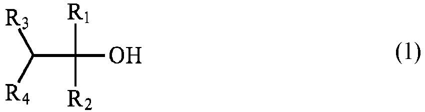 ist,
   wobei R₁ bis R₄ unabhängig voneinander für Wasserstoff oder einen Alkyl-, Aryl- oder Alkylaryl-Rest mit 1 bis 10 C-Atomen stehen.
21. Verfahren gemäß Ausführungsform 20, wobei direkt nach der Herstellung des Polycarbonats (I) in einem weiteren, der Bildung von Polycarbonat (II) vorgeschalteten Verfahrensschritt Lösungsmittel, die bei der Herstellung des Polycarbonats (I) zum Einsatz kamen, bis zu einem Restgehalt von <0,1 Gew.-% entfernt werden.
22. Verfahren gemäß Ausführungsform 21, wobei die Entfernung des Lösungsmittels entweder durch Fällung, optional Trennung des gefällten Feststoffs von der Mutterlauge, optional Wäsche des gefällten Feststoffs und Trocknung oder alternativ durch Sprühtrocknung erfolgt und wobei das Polycarbonat (I) zu keinem Zeitpunkt dieses vorgeschalteten Aufarbeitungs-Verfahrensschrittes einer Temperatur >200°C ausgesetzt wird.
23. Verfahren gemäß Ausführungsform 20, wobei in einem einzigen Reaktionsschritt Lösungsmittel, die bei der Herstellung des Polycarbonats (I) zum Einsatz kamen, bis zu einem Restgehalt von <0,1 Gew.-% entfernt werden und die Bildung von Polycarbonat (II) erfolgt.
24. Verfahren gemäß einem der Ausführungsformen 18 bis 23, wobei bei der Herstellung von Polycarbonat (II) aus Polycarbonat (I) ein Alken abgespalten wird.
25. Verfahren gemäß einer der Ausführungsformen 18 bis 24, wobei die phosphorige Säure als wässrige Lösung eingesetzt wird.
26. Verfahren gemäß einer der Ausführungsformen 18 bis 25, wobei die Herstellung von Polycarbonat (II) aus Polycarbonat (I) in einem Verfahrensaggregat ausgewählt aus der Gruppe umfassend Einwellenextruder, gleichläufige oder gegenläufige Doppelwellenextruder, Planetwalzenextruder, kontinuierliche oder diskontinuierliche Innenkneter, Filmtruder, Strangverdampfer und Schaumverdampfer durchgeführt wird.
27. Verfahren gemäß einer der Ausführungsformen 18 bis 26, wobei die Menge der phosphorigen Säure 0,02 bis 0,15 Gew.-%, bezogen auf die Menge von Polycarbonat (I) beträgt.
28. Verfahren gemäß einer der Ausführungsformen 18 bis 26, wobei die Menge der phosphorigen Säure 0,03 bis 0,07 Gew.-%, bezogen auf die Menge von Polycarbonat (I) beträgt.
29. Thermoplastische Masse enthaltend ein Polycarbonat gemäß einer der Ausführungsformen 1 bis 17 und mindestens eine Phosphorverbindung, ausgewählt aus der Gruppe bestehend aus phosphoriger Säure, Phosphorsäure, Salzen der phosphorigen Säure und Phosphorsäure sowie Kondensaten der phosphorigen Säure und Phosphorsäure, in Summe in einer Menge von jeweils 0,01 bis 0,30 Gew.-%.
30. Thermoplastische Masse gemäß Ausführungsform 29, wobei die Phosphorverbindung ausgewählt ist der Gruppe bestehend aus phosphoriger Säure und Salzen der phosphorigen Säure.
31. Thermoplastische Masse gemäß Ausführungsform 29 oder 30, wobei die Menge der Phosphorverbindung 0,02 bis 0,15 Gew.-% beträgt.
32. Thermoplastische Masse gemäß Ausführungsform 29 oder 30, wobei die Menge der Phosphorverbindung 0,03 bis 0,07 Gew.-% beträgt.
33. Copolymer enthaltend Struktureinheiten abgeleitet von einem Polycarbonat gemäß einer der Ausführungsformen 1 bis 17 sowie enthaltend Struktureinheiten abgeleitet von einem weiteren Polymer enthaltend mindestens eine Art funktioneller Gruppen ausgewählt aus Ester-, Hydroxy- und Epoxygruppen, bevorzugt enthaltend Epoxygruppen.
34. Thermoplastische Formmasse enthaltend ein Copolymer gemäß Ausführungsform 33 und/oder ein Polycarbonat gemäß einer der Ausführungsformen 1 bis 17 und/oder eine thermoplastische Masse gemäß einer der Ausführungsformen 29 bis 32.
35. Verwendung eines Polycarbonats gemäß einer der Ausführungsformen 1 bis 17 oder einer thermoplastischen Masse gemäß einer der Ausführungsformen 29 bis 32 zur Herstellung eines Copolymers enthaltend mindestens einen Polycarbonat-Block enthaltend von Bisphenol-A abgeleitete Struktureinheiten und mindestens einen Block eines von einem solchen Polycarbonat unterschiedlichen Polymers oder zur Herstellung einer thermoplastischen Masse welche ein solches Copolymers enthält, in einem Verfahren umfassend die Schritte
   a) Aufschmelzen einer Zusammensetzung enthaltend
      ein Polycarbonat gemäß einer der Ausführungsformen 1 bis 17 oder eine thermoplastische Masse gemäß einer der Ausführungsformen 29 bis 32 und
      ein weiteres Polymer enthaltend mindestens eine Art funktioneller Gruppen ausgewählt aus Ester-, Hydroxy- und Epoxygruppen, bevorzugt enthaltend Epoxygruppen
      durch Einbringen thermischer Energie und/oder mechanischer Scherung,
   b) Vermischen und Dispergieren der verschiedenen Komponenten der Zusammensetzung mit- bzw. ineinander,
   c) Verfestigen der Schmelze durch Abkühlen,
   d) optional Granulieren des verfestigten aus den Schritten (a) bis (c) resultierenden Produktes,
   wobei im Rahmen des Verfahrens in der Schmelze eine chemische Kopplungsreaktion der von einer Hydroxybenzoesäure abgeleiteten, als Endgruppen vorliegenden Struktureinheiten mit freier COOH-Funktionalität im Polycarbonat (II) mit dem weiteren Polymer enthaltend mindestens eine Art funktioneller Gruppen ausgewählt aus Ester-, Hydroxy- und Epoxygruppen, bevorzugt enthaltend Epoxygruppen, erfolgt.
36. Verwendung gemäß Ausführungsform 35, wobei das Polymer enthaltend Epoxygruppen ein Vinyl(co)polymer oder Polyolefin ist, welches von Glycidylmethacrylat abgeleitete Struktureinheiten enthält, welche auf das Vinyl(co)polymer oder Polyolefin aufgepfropft oder in die Polymerkette des Vinyl(co)polymers oder Polyolefins eingebunden sind.
37. Verwendung gemäß einer der Ausführungsformen 35 oder 36, wobei der Schritt b) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und bei einer Temperatur der Schmelze von 230 bis 300°C erfolgt.
38. Formkörper enthaltend ein Polycarbonat gemäß einer der Ausführungsformen 1 bis 17 und/oder ein Copolymer gemäß Ausführungsform 33.

### Beispiele

### Herstellung der Polycarbonat-Vorstufe PC (I)

In einem kontinuierlich betriebenen Laborreaktor wurde Bisphenol A im Grenzflächenverfahren in einem Gemisch aus Methylenchlorid und Chlorbenzol als Lösemittel in Anwesenheit einer Kettenabbrechermischung bestehend aus p-tert.-Butylphenol und tert.-Butyl-4-Hydroxybenzoat mit Phosgen zur Polykondensationsreaktion gebracht.

Im Rahmen dieser Synthese wurden 71,9 g/h gasförmiges Phosgen in 940,6 g/h organischem Lösemittelgemisch aus 50 Gew.-% Methylenchlorid und 50 Gew.-% Chlorbenzol bei -7 °C gelöst. Die derart hergestellte Phosgen-Lösung wurde in Kontakt gebracht mit 895,8 g/h einer auf 30 °C temperierten 15 Gew.-%igen wässrigen alkalischen Bisphenol A-Lösung. Dafür wurde die alkalische Bisphenol A-Lösung durch einen Edelstahlfilter mit der Porengröße 90 µm in die Phosgen-Lösung gepresst und dadurch in dieser dispergiert. In der Bisphenol A-Lösung wurden 2 mol NaOH auf 1 mol Bisphenol-A eingesetzt. Das Reaktionsgemisch wurde in einer auf 25 °C temperierten Fink HMR040 Mischpumpe bis zur vollständigen Umsetzung des Phosgens abreagiert. Danach wurden 5,9 g/h eines Gemisches aus 50 mol-% p-tert-Butylphenol und 50 mol-% tert-Butyl-4-Hydroxybenzoat als Kettenabbrecher zudosiert, und zwar in Form einer 10 Gew.-%igen Lösung im Lösemittelgemisch aus 50 Gew.-% Methylenchlorid und 50 Gew.-% Chlorbenzol. Das so erhaltene Reaktionsgemisch wurde in einer zweiten, auf 25 °C temperierten Fink HMR040 Mischpumpe mit 66,0 g/h 32,2 Gew.-%iger wässriger Natronlauge weiterreagiert. Es folgten zwei überflutet gefahrene, mit Strömungsbrechern ausgestattete Rührkessel mit einer Verweilzeit von jeweils 600 s, jeweils gefolgt von einer Zahnradpumpe, die sowohl der Förderung des Reaktionsgemisches als auch der weiteren Dispergierung dienen. Nach der ersten Pumpe, d.h. vor dem zweiten Rührkessel, wurde als Katalysator 0,666 g/h einer 10 Gew.%-igen Lösung von N-Ethylpiperidin in Chlorbenzol zudosiert. Am Ende der Reaktion lag der pH-Wert bei etwa 11,5. In einem Phasentrenngefäß wurde die organische von der wässrigen Phase des zweiphasigen Reaktionsgemisches getrennt und die organische Phase mit einer 0,1 Gew.-%igen wässrigen HCl-Lösung zur Entfernung des Katalysators gewaschen. Nachfolgend wurde weiterhin mit vollentsalztem Wasser zur Entfernung der Salzreste gewaschen. Die derart gewaschene Polymerlösung wurde in organischem Lösungsmittel gefällt und über Nacht im Vakuumofen bei 120 °C getrocknet.

Das derart hergestellte Polycarbonat PC (I) ist ein Pulver und weist ein gewichtsgemitteltes Molekulargewicht M_{w} von 18,8 kg/mol und ein zahlengemitteltes Molekulargewicht Mₙ von 11,3 kg/mol, gemessen mittels Gelpermeationschromatographie (GPC) in Methylenchlorid als Lösungsmittel bei Raumtemperatur mit einer Kalbrierung gegen einen Bisphenol-A-basierten Polcarbonat-Standard und mit einem auf eine Wellenzahl von 1775 cm⁻¹ eingestellten, Polycarbonatselektiven Infrarot (IR)-Detektor, auf.

Der Gehalt an freiem Bisphenol-A in dem Polycarbonat PC (I) wurde mit einem Wert von 3 Gew.-ppm bestimmt.

### Herstellung erfindungsgemäßer Polycarbonate (II) durch Endgruppenpyrolyse der Polycarbonat-Vorstufe PC (I)

Die Freisetzung der COOH-Endgruppen durch thermische Endgruppenpyrolyse der gemäß dem zuvor beschriebenen Verfahren hergestellten Polycarbonat-Vorstufe PC (I) unter Abspaltung der Schutzgruppe in Form von Isobutylen-Gas erfolgte in einem kontinuierlichen Doppelwellen-Extruder vom Typ Process 11 (Thermofischer Scientific, Karlsruhe, Deutschland) mit einer Schneckenkonfiguration mit drei Mischzonen und mit einem Verhältnis an Länge zu Durchmesser (L/D) von 40. Die verschiedenen erfindungsgemäßen Beispiele und Vergleichsbeispiele wurden bei unterschiedlichen Schmelzetemperaturen im Bereich von 245 bis 320°C, gemessen über einen düsenaustrittsnah im letzten Gehäuseelement des Extruders verbauten Thermofühler, hergestellt. Die Schmelzetemperatur resultierte dabei aus dem Eintrag mechanischer Energie durch die Knetelemente sowie dem Eintrag thermischer Energie durch die Beheizung des Extrudergehäuses. Das Extrudergehäuse ist in acht separat und unterschiedlich beheizbare Zonen eingeteilt, welche vom Extrudereinzug aus betrachtet in Richtung der Austrittsdüse des Extruders mit den Ziffern 1 bis 8 aufsteigend nummeriert sind. Die drei Knetzonen befanden sich im Übergang der Heizzonen 3 und 4, in der Heizzone 5 sowie im Übergang der Heizzonen 6 und 7. Der Rohstoffeinzug befand sich in der Heizzone 1. Darüber hinaus wurde die Austrittsdüse separat beheizt. Zur Einstellung der unterschiedlichen Schmelzetemperaturen, die über den düsenaustrittsnah im letzten Gehäuseelement des Extruders verbauten Thermofühler erfasst wurden, wurden die Gehäusetemperaturen in den Gehäusezonen sowie die Düsentemperatur auf unterschiedliche Temperaturen temperiert. Das erste Gehäuse (Rohstoffeinzugszone) wurde in allen Fällen nicht beheizt, Zone 2 wurde in allen Fällen auf eine Soll-Temperatur von 70°C, Zone 3 in allen Fällen auf eine Soll-Temperatur von 190°C und Zonen 4 bis 8 sowie die Austrittsdüse wurden in allen Fällen mit jeweils derselben Soll-Temperatur (Tₛₒₗₗ) gemäß Tabelle 1 beheizt. In allen Fällen kam als Einsatzrohstoff dieselbe Polcarbonat-Vorstufe (PC (I)) zum Einsatz. Der Extruder wurde in allen Fällen mit einem Durchsatz von etwa 300 g/h und mit einer Drehzahl von 175 min⁻¹ betrieben. Durch Anlegen eines Unterdruckes von mindestens -800 mbar wurde das im Extruder unter diesen Verfahrensbedingungen freigesetzte Isobutylen-Gas kontinuierlich über einen Entgasungsdom in der vorletzten (siebten) Heizzone aus dem Extruder abgezogen. Unter diesen Verfahrensbedingungen ergab sich in allen Fällen eine Verweilzeit des Polycarbonats im Extruder von ca. 70 s.

Der Zusatz von phosphoriger Säure erfolgte in Form von wässrigen Lösungen durch Auftrag auf das Pulver der Polycarbonat-Vorstufe PC (I). Durch Auftragung von jeweils 2,5 Gew.-Teilen wässriger H₃PO₃-Lösung auf das Pulver der Polycarbonat-Vorstufe PC-1 wurden durch Verwendung unterschiedlicher Konzentrationen der wässrigen H₃PO₃-Lösung Pulvermischungen mit unterschiedlichem Gehalt an H₃PO₃ hergestellt. Für die Herstellung der PC-Pulvermischungen enthaltend 0,002 Gew.-%, 0,01 Gew.-%, 0,05 Gew.-% und 0,25 Gew.-% phosphorige Säure kamen dabei wässrige H₃PO₃-Lösungen mit Konzentrationen von 0,08 Gew.-%, 0,4 Gew.-%, 2,0 Gew.-% bzw. 10 Gew.-% an H₃PO₃ zum Einsatz. Diese wurden auf 99,998 Gew.-%, 99,99 Gew.-%, 99,95 Gew.-% bzw. 99,75 Gew.-% des Pulvers der Polycarbonat-Vorstufe PC (I) gleichmäßig aufgezogen und danach die Mischung gründlich homogenisiert. Durch die Aufbringung der phosphorigen Säure als verdünnte wässrige Lösungen wurden durch dieses Verfahren in etwa gleich großen Mengen (je nach Zusammensetzung 2,25 bis 2,5 Gew.-%) an Wasser in das Polycarbonat eingetragen. Die derartig hergestellte Pulvermischung wurde entweder ohne weitere Trocknung für die Endgruppenpyrolyse eingesetzt oder zuvor im Vakuumtrockenschrank für zwei Stunden bei 100°C getrocknet, um das über die wässrige H₃PO₃-Lösung eingetragene Wasser wieder vor der thermischen Behandlung aus der Zusammensetzung zu entfernen.

Die für die unterschiedlich hergestellten erfindungsgemäßen Polycarbonate und Vergleichs-Polycarbonate eingestellten bzw. gemessenen Verfahrensparameter (eingestellte Solltemperaturen in den Extruderheizzonen und an der Schmelzeaustrittsdüse, die am düsenaustrittsnah im letzten Gehäuseelement des Extruders verbauten Thermofühler gemessenen Schmelzetemperaturen, die bei der Endgruppenpyrolyse zugesetzten Mengen an phosphoriger Säure sowie Informationen zu einer etwaigen Trocknung des Polycarbonats nach Zusatz der wässrigen H₃PO₃-Lösung und vor der Endgruppenpyrolyse) sind der Tabelle 1 zu entnehmen.

### Charakterisierung der Polycarbonate

Die strukturelle Analyse der Polycarbonate im Hinblick auf den Gehalt an strukturellen Einheiten gemäß Komponenten A, B1, B2-a, B2-b und C erfolgte mittels ¹H NMR-Spektroskopie in deuteriertem Chloroform als Lösungsmittel bei Raumtemperatur mit eines Bruker Avance III HD 600 MHz NMR-Spektrometers.

Die integrierte Signalintensität der jeweiligen NMR-Signale dividiert durch die Anzahl der das Signal verursachenden Protonen ist proportional zum molaren Gehalt der jeweiligen Struktureinheit. Aus den entsprechenden Verhältnissen der derart normierten Signalintensitäten wurden somit die molaren Verhältnisse der entsprechenden Struktureinheiten gemäß der verschiedenen Merkmale für die erfindungsgemäßen Polycarbonate ermittelt. Sowohl die gemessenen Intensitäten der für die verschiedenen strukturellen Einheiten gemäß Komponenten A, B1, B2-a, B2-b und C spezifischen NMR-Signale sowie die daraus wie beschrieben daraus ermittelten molaren Verhältnisse A/B, B2/(A+B2), B1/(A+B) und C/(A+B+C) gemäß der kennzeichnenden strukturellen Merkmale der Polycarbonate sind ebenfalls in Tabelle 1 aufgeführt. B2 ist dabei die Summe aus B2-a und B2-b und B ist die Summe aus B1 und B2.

Der Gehalt an phenolischen OH-Gruppen wurde ebenfalls aus dem ¹H NMR-Spektrum ermittelt. Dafür wurde das Dublett-Signal bei etwa 6,68 ppm, gemessen relativ zu Trimethylsilan (TMS) als Referenz, welches den beiden zur phenolischen OH-Gruppe ortho-ständigen aromatischen Protonen zuzuordnen ist, relativ zu dem Singulett-Signal bei etwa 1,68 ppm, gemessen relativ zu Trimethylsilan (TMS) als Referenz, welches den sechs Methylprotonen in den vom Bisphenol-A abgeleiteten Struktureinheiten des Polycarbonat-Rückgrats (der Polycarbonat-Polymerkette) zuzuordnen ist, ausgewertet und in Relation gesetzt.

Zur Bestimmung des Gehaltes an freiem Bisphenol-A wurden die erfindungsgemäßen als auch die nicht erfindungsgemäßen Polycarbonate sowie das Ausgangspolycarbonat PC(I) in Dichlormethan gelöst und mit Aceton ausgefällt. Das Filtrat wurde mittels Hochdruckflüssigkeitschromatographie mit UV-Detektor (HPLC-UV) analysiert. Als Säulenmaterial wurde eine C18-Phase eingesetzt und als Eluent Wasser und Methanol in einem Gradienten verwendet.

Die Säurezahl der Polycarbonate wurde bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur. Das zu untersuchende Polycarbonat wurde dazu in einer Konzentration von 10 g/L in 50 ml Dichlormethan bei Raumtemperatur gelöst. Vor der potentiometrischen Titration mit 0,1 N ethanolischer KOH wurden der Probenlösung 5 ml Ethanol zugegeben.

Die Eigenfarbe der Polycarbonat-Granulate, welche als Produkt des Endgruppenpyrolyse-Extruderprozesses erhalten wurden, wurde auf der wie folgt definierten relativen farbort- und farbintensitätsbasierten Skala visuell beurteilt, wobei eine Bewertung von 3 die beste und eine Bewertung von 0 die schlechteste Bewertung darstellt:
- 3: farblos
- 2: leicht gelbstichig
- 1: gelblich
- 0: gelb/bräunlich oder gräulich

Auch die phenolischen OH-Gruppen-Gehalte, die Gehalte an freiem Bisphenol-A, die Säurezahlen sowie die Eigenfarbe der Polycarbonat-Granulate der Polycarbonate sind in Tabelle 1 aufgeführt.

**Tabelle 1: Ergebnisse der strukturellen Charakterisierung und Eigenschaften der hergestellten Polycarbonate**

| **Prozessparameter** | **PC-1^{*}** | **PC-2*** | **PC-3** | **PC-4*** | **PC-5** | **PC-6*** | **PC-7** | **PC-8*** | **PC-9** | **PC-10** | **PC-11** | **PC-12** | **PC-13*** | **PC-14** | **PC-15** |
|---|---|---|---|---|---|---|---|---|---|---|---|---|---|---|---|
| Tₛₒₗₗ in Zonen 4-8 / an Düse [°C] | - | 250 | 250 | 260 | 260 | 280 | 280 | 300 | 300 | 320 | 320 | 320 | 320 | 320 | 340 |
| Schmelzetemperatur [°C] | - | 238 | 237 | 245 | 246 | 265 | 264 | 285 | 284 | 302 | 303 | 301 | 303 | 303 | 320 |
| H₃PO₃ [Gew.-%] | - | 0 | 0,05 | 0 | 0,05 | 0 | 0,05 | 0 | 0,05 | 0,05 | 0,01 | 0,01 | 0,002 | 0,25 | 0,05 |
| Trocknung nach H₃PO₃-Zugabe | - | ja | ja | ja | ja | ja | ja | ja | ja | ja | ja | nein | ja | ja | ja |
| **Merkmal** | | | | | | | | | | | | | | | |
| BPA [Gew.-ppm] | 3 | 11 | 8 | 15 | 5 | 96 | 3 | 89 | 3 | 3 | 14 | 22 | 81 | 2 | 2 |
| phenolisches OH [Gew.-%] | 0,0035 | 0,021 | 0,010 | 0,044 | 0,012 | 0,10 | 0,010 | 0,10 | 0,010 | 0,013 | 0,040 | 0,054 | 0,13 | 0,015 | 0,016 |
| Säurezahl [mg KOH/g] | 0 | 3,4 | 5,1 | 2,3 | 4,4 | 0 | n.g. | 0 | 4,6 | 4,2 | 3,2 | 2,6 | 0 | 5,0 | 4,2 |
| Signalintensität (8,14 ppm) = A | 0 | 3,0 | 4,0 | 2,2 | 4,0 | 0 | 4,1 | 0 | 4,0 | 3,8 | 2,8 | 2,3 | 0 | 3,9 | 3,8 |
| Signalintensität (8,05 ppm) = B1 | 4,3 | 0,62 | 0 | 0,47 | 0 | 0 | 0 | 0 | 0 | 0 | 0 | 0 | 0 | 0 | 0 |
| Signalintensität (8,26 ppm) = B2-a | 0 | 0,25 | 0 | 0,89 | 0,14 | 3,8 | 0,06 | 3,9 | 0,09 | 0,14 | 0,80 | 1,15 | 3,8 | 0,21 | 0,27 |
| Signalintensität (8,22 ppm) = B2-b | 0 | 0,23 | 0,09 | 0,47 | 0,08 | 0 | 0,14 | 0 | 0,21 | 0,25 | 0,38 | 0,39 | 0 | 0,22 | 0,22 |
| Signalintensität (1,32 ppm) = C | 21,0 | 20,8 | 21,4 | 21,5 | 21,5 | 21,0 | 21,5 | 20,5 | 21,7 | 21,3 | 21,9 | 22,2 | 19,2 | 22,3 | 20,9 |
| A/B | 0 | 2,7 | 44 | 1,2 | 18 | 0 | 21 | 0 | 13 | 10 | 2,4 | 1,5 | 0 | 9 | 8 |
| B2/(A+B2) | - | 0,14 | 0,02 | 0,38 | 0,05 | 1,00 | 0,05 | 1,00 | 0,07 | 0,09 | 0,30 | 0,40 | 1,00 | 0,10 | 0,11 |
| B1/(A+B) | 1 | 0,15 | 0 | 0,12 | 0 | 0 | 0 | 0 | 0 | 0 | 0 | 0 | 0 | 0 | 0 |
| C/(A+B+C) | 0,52 | 0,53 | 0,54 | 0,54 | 0,53 | 0,55 | 0,53 | 0,54 | 0,53 | 0,53 | 0,55 | 0,56 | 0,53 | 0,53 | 0,52 |
| Eigenfarbe des Granulats | - | 1 | 3 | 1 | 3 | 1 | 3 | 0 | 3 | 2 | 2 | 2 | 0 | 0 | 2 |

| | | | | | | | | | | | | | | | |
|---|---|---|---|---|---|---|---|---|---|---|---|---|---|---|---|
| Mit ^{∗} gekennzeichnete Polycarbonate sind nicht erfindungsgemäße Beispiele. n.g. = nicht gemessen | | | | | | | | | | | | | | | |

Die Beispiele in Tabelle 1 zeigen, dass die Polycarbonate, die nach dem erfindungsgemäßen Verfahren, das heißt mit Zusatz von H₃PO₃ bei der Endgruppenpyrolyse herstellt wurden (PC-3, PC-5 , PC-7 und PC-9), die angestrebten erfindungsgemäßen strukturellen Merkmale aufweisen und sich durch eine bessere (farbneutrale) Eigenfarbe und einen geringeren Gehalt an phenolischen OH-Gruppen sowie insbesondere auch an freiem Bisphenol A auszeichnen als die vergleichbaren Polycarbonate, welche nach dem Verfahren gemäß dem Stand der Technik ohne Zusatz von H₃PO₃ bei der Endgruppenpyrolyse hergestellt wurden (PC-2^{∗}, PC-4^{∗}, PC-6^{∗} und PC-8^{∗}). Die nach dem erfindungsgemäßen Verfahren herstellten Polycarbonate sind in ihrer Endgruppenstruktur deutlich definierter, das heißt sie weisen einen höheren Gehalt an freien COOH-Endgruppen A und einen geringeren Gehalt an der Vorstufen-Endgruppenspezies B1 sowie der aus A in einer der Endgruppenpyrolyse nachgeschalteten Folgereaktion aus den COOH-Endgruppen A unerwünscht entstehenden Umesterungsspezies B2 auf. Somit weisen sie höhere Werte von A/B sowie niedrigere Werte von B1/(A+B) und B2/(A+B2) auf.

Weiterhin zeigt der Vergleich des erfindungsgemäßen Beispiels PC-3 mit dem analog ohne Zusatz von H₃PO₃ hergestelltem Vergleichsbeispiel PC-2^{∗}, dass durch den Zusatz von H₃PO₃ im Endgruppenpyrolyseschritt des Herstellverfahrens nicht nur die Umesterung der freigesetzten COOH-Endgruppen sowie die Entstehung von freiem Bisphenol A durch thermische Rückspaltung inhibiert, sondern überraschend zusätzlich auch die Endgruppenpyrolyse der tert.-Butyl-4-Hydroxybenzoat-Endgruppenspezies B1 katalysiert wird, so dass die Endgruppenpyrolyse nicht nur bei höheren Temperaturen ermöglicht wird, wie sie in vielen industriell etablierten Aufarbeitungs-, z.B. Entgasungsprozessen in der Schmelze technisch nur aufwändig zu vermeiden sind, sondern grundsätzlich auch eine quantitativ vollständige Endgruppenpyrolyse im Bereich sehr geringer Schmelzetemperaturen von unterhalb 240°C, das heißt in einem Verfahren mit reduziertem Energieaufwand möglich ist. Insgesamt zeigen die Daten somit, dass für den Prozess der Endgruppenpyrolyse erstmalig ein sehr breites, flexibel auszugestaltendes Prozessfenster ermöglicht wird, was eine Vielzahl möglicher Prozessführungen und die Prozesse insgesamt robuster auszugestalten erlaubt. Dadurch resultieren weniger Qualitätsausschuss und weniger Betriebsstörungen mit unerwünschten Anlagenstillstands- und Reinigungszeiten.

Ein Vergleich des erfindungsgemäßen Beispiels PC-9 mit den ebenfalls erfindungsgemäßen Beispielen PC-10 und PC-15, welche alle unter Zusatz derselben Menge von 0,05 Gew.-% an H₃PO₃ in dem erfindungsgemäßen Verfahren hergestellt wurden, zeigt, dass die erfindungsgemäßen Polycarbonate thermostabil sind gegenüber weiterer/höherer thermischer Belastung. Trotz einer um gegenüber PC-9 um 18°C bzw. 36°C höheren Schmelzetemperatur bei der Endgruppenpyrolyse werden in PC-10 und PC-15 sehr niedrige Restgehalte an freiem BPA und phenolischen OH-Gruppen sowie eine gegenüber dem Stand der Technik verbesserte (farbneutralere) Produkteigenfarben realisiert. Dies gilt insbesondere auch im Vergleich zu den Vergleichsbeispielen PC-4^{∗}, PC-6^{∗} und PC-8^{∗}, die bei deutlich geringeren Schmelzetemperaturen in der Endgruppenpyrolyse in dem Verfahren gemäß dem Stand der Technik ohne Zusatz von H₃PO₃ hergestellt wurden. Trotz der erhöhten Temperaturen bei der Endgruppenpyrolysen, die eine weitere thermische Belastung beispielsweise in einem nachgeschalteten Verarbeitungsschritt zu simulieren vermögen, weisen die Beispiele PC-10 und PC-15 weiterhin die erfindungsgemäßen Strukturmerkmale, das heißt einen hohen Gehalt an freien COOH-Endgruppen A sowie einen geringen Gehalt an aus diesen Endgruppenspezies A in einer der Endgruppenpyrolyse nachgeschalteten Folgereaktion unerwünscht entstehenden Umesterungsspezies B2 auf. Im Vergleich zum erfindungsgemäßen Beispiel PC-15, welches bei einer Schmelzetemperatur von 320°C im Endgruppenpyrolyseschritt hergestellt wurde und noch nahezu die optimale (das heißt maximal mögliche) Konzentration an freien COOH-Endgruppen A enthält, weist das Vergleichsbeispiel PC-6^{∗}, welches bei einer Schmelzetemperatur von 265°C im Endgruppenpyrolyseschritt hergestellt wurde (das heißt bei einer im Vergleich zu PC-15 um 55°C niedrigeren Temperatur), bereits keine freien COOH-Endgruppen A mehr auf, das heißt diese wurden in der unerwünschten Folgereaktion hier bereits vollständig quantitativ umgeestert.

Ein Vergleich der Beispiele PC-10, PC-11, PC-13^{∗} und PC-14 zeigt den Einfluss der in der Endgruppenpyrolyse eingesetzten Menge an H₃PO₃ im Bereich 0,002 Gew.-% bis 0,25 Gew.-%, bezogen auf die Menge des Polycarbonats. Es ist ersichtlich, dass eine Einsatzmenge von 0,002 Gew.-% H₃PO₃ (PC-13^{∗}) nicht, wohl aber eine Einsatzmenge von 0,01 Gew.-% H₃PO₃ (PC-11) im Endgruppenpyrolyseschritt bereits ausreicht, um die angestrebten technischen Effekte in Bezug auf die Reduktion des Gehaltes an freiem Bispenol A und phenolischen Endgruppen, der thermischen Stabilität der freien COOH-Endgruppen A gegenüber unerwünschter Umesterung sowie der Realisierung einer farbneutralen Eigenfarbe des Polycarbonats zu erzielen. Bei einer Einsatzmenge von 0,25 Gew.-% H₃PO₃ (PC-14) werden die technischen Effekte in Bezug auf die Reduktion des Gehaltes an freiem Bispenol A und phenolischen Endgruppen sowie der Verbesserung der thermischen Stabilität der freien COOH-Endgruppen A gegenüber unerwünschter Umesterung noch erzielt, jedoch weist das mit dieser Menge an H₃PO₃ gemäß dem erfindungsgemäßen Verfahren hergestellte Polycarbonat keine vorteilhafte (farbneutrale) Eigenfarbe mehr auf. Insofern ist diese Konzentration an H₃PO₃ zwar noch als erfinderisch, aber nicht mehr als bevorzugt anzusehen.

Weiterhin zeigt der Vergleich der erfindungsgemäßen Beispiele PC-11 und PC-12 mit dem Vergleichsbeispiel PC-13^{∗}, dass die angestrebten technischen Effekte und strukturellen Merkmale des hergestellten Polycarbonats unabhängig davon erzielt werden, wie hoch die Feuchte (das heißt der Wassergehalt) des dem Endgruppenpyrolyse-Schritt des Herstellverfahrens zugeführten Polycarbonats ist, das heißt unabhängig davon, ob das Polycarbonat nach Zusatz der H₃PO₃ in Form von verdünnten wässrigen Lösungen vor der Endgruppenpyrolyse getrocknet wird. Der Vergleich der erfindungsgemäßen Beispiele PC-11 und PC-12 zeigt aber auch, dass es hinsichtlich des Gehaltes an freiem Bisphenol-A vorteilhaft ist, eine Vortrocknung durchzuführen.

### Herstellung von Copolymeren enthaltenden thermoplastischen Formmassen aus den Polycarbonaten und deren strukturelle Charakterisierung

Aus den Polycarbonaten PC-2^{*} und PC-3 wurden über ein Reaktivextrusionsverfahren thermoplastische PC/PMMA-Formmassen, welche PC-PMMA-Copolymere enthalten, hergestellt. Hierfür wurden die Polycarbonate zunächst zu Pulver vermahlen und mit einem ebenfalls pulverförmigen Methylmethacrylat-Glycidylmethacrylat-Copolymer (PMMA-GMA) im Verhältnis 80 Gew.-% des jeweiligen Polycarbonats zu 20 Gew.-% des PMMA-GMA zu einer homogenen Pulvermischung vorgemischt. Bei dem PMMA-GMA handelte es sich um ein statistisches Methylmethacrylat-Glycidylmethacrylat-Copolymerisat mit einem Gehalt an von Glycidylmethacrylat abgeleiteten Struktureinheiten von 1,0 Gew.-%, hergestellt durch radikalische Polymerisation, welches ein gewichtsgemitteltes Molekulargewicht M_{w} von 60.000 g/mol, gemessen mittels Gelpermeationschromatographie bei Raumtemperatur in Tetrahydrofuran als Lösungsmittel gegen einen Polystyrol-Kalibrierungsstandard, aufwies. Das Epoxid-Äquivalent dieses PMMA-GMA-Copolymers wurde gemäß DIN EN 1877-1 (Version 12-2000) in Dichlormethan bei Raumtemperatur zu 0,32 Gew.-% bestimmt.

Die thermoplastischen PC/PMMA-Formmassen wurden aus den beschriebenen Pulvermischungen der Polycarbonate und des statistischen PMMA-GMA-Copolymers auf einem kontinuierlichen Doppelwellen-Extruder vom Typ Process 11 (Thermofischer Scientific, Karlsruhe, Deutschland) mit einer Schneckenkonfiguration mit zwei Mischzonen bei einer Schmelzetemperatur von 260°C, einem Durchsatz von etwa 300 g/h, einer Drehzahl von 125 min⁻¹ und bei einem Absolutdruck von 100 mbar compoundiert. Unter diesen Bedingungen ergab sich eine Verweilzeit von ca. 90 s. Nach Austritt durch eine Düsenplatte wurde der Schmelzestrang abgekühlt, dadurch verfestigt und anschließend granuliert. Für die Compoundierungen wurden die Pulvermischungen aus der PC- und der PMMA-Komponente über einen volumetrischen Dosierer in die Einlaufzone des Doppelwellenextruders dosiert.

An den derartig hergestellten thermoplastischen Formmassen wurde erneut die Säurezahl mit demselben analytischen Verfahren ermittelt, das auch bei der diesbezüglichen Charakterisierung der als Rohstoff in der Reaktivextrusion zum Einsatz kommenden Polycarbonate angewandt wurde. Die Abnahme der Säurezahl in den Reaktivextrudaten verglichen mit dem mit dem Massenanteil des Polycarbonats in der Reaktivzusammensetzung gewichteten Säurezahl des eingesetzten Polycarbonats belegt, dass die COOH-Gruppen des Polycarbonats während der Schmelzeextrusion zur Reaktion gebracht wurden. Da die den Umesterungsprodukten zugeordneten ¹H NMR-Signale bei 8,22 ppm und 8,26 ppm dabei in ihrer Intensität nicht zunahmen, weist diese Beobachtung auf eine Reaktion der COOH-Gruppen in der angestrebten nucleophilen Additionsreaktion mit den Epoxy-Gruppen der von Glycidylmethacrylat abgeleiteten Struktureinheiten im Methylmethacrylat-Glycicylmethacrylat-Copolymer unter Ausbildung eines PC-PMMA-Copolymers hin.

Weiterhin wurde an den derartig hergestellten thermoplastischen Formmassen erneut ein ¹H NMR-Spektrum in deuteriertem Chloroform bei Raumtemperatur aufgenommen, wobei diese Untersuchung dem Nachweis einer chemischen Umsetzung der Epoxy-Gruppen des Glycicylmethacrylats im statistischen Methylmethacrylat-Glycicylmethacrylat-Copolymer unter Ausbildung eines PC-PMMA-Copolymers diente. Dabei wurden die charakteristischen ¹H-NMR-Signale der Protonen im ungeöffneten Epoxy-Ring bei 2,64 ppm, 2,86 ppm und 3,21 ppm, gemessen relativ zu Trimethylsilan (TMS) als Referenz, zu Grunde gelegt, wobei deren Intensität relativ zu der des den drei Methylgruppen-Protonen im Methylmethacrylat zuordneten Singulett-Signals bei 3,6 ppm, gemessen relativ zu Trimethylsilan (TMS) als Referenz, ausgewertet wurde. Die relative Intensität dieser drei Signale nahm bei der Herstellung der erfindungsgemäßen Formmassen durch Reaktivcompoundierung gegenüber der physikalischen Mischung der Ausgangskomponenten ab. Gleichzeitig entstand im ¹H-NMR-Spektrum bei dieser Umsetzung ein sehr breites und vergleichsweise schlecht aufgelöstes Multiplett-Signal im Bereich von 4,45-4,55 ppm, welches der Verknüpfungsgruppe zugeordnet wird, die durch nucleophile Addition von Carboxy-Gruppen der Komponente A an Epoxy-Gruppen der Komponente B entsteht. Das Auftreten dieses neuen Signals belegt somit, dass durch die chemische Umsetzung der Epoxy-Gruppen in Komponente B Copolymer enthaltend Blöcke aus den Komponenten A und B entstanden ist.

In Tabelle 2 sind die analytischen Befunde, welche an den drei hergestellten thermoplastischen Formmassen ermittelt wurden, zusammengefasst.

### Herstellung von Formkörpern aus den Copolymeren enthaltenden thermoplastischen Formmassen und deren technische Bewertung

Aus den wie zuvor beschrieben hergestellten thermoplastischen PC/PMMA-Formmassen enthaltend PC-PMMA-Copolymer, welche aus den Zusammensetzungen gemäß Tabelle 2 hergestellt wurden, wurden mit einer Labor-Spritzgussmaschine vom Typ Boy XS (Dr. Boy GmbH & Co. KG, Neustadt-Fernthal, Deutschland) bei einer Schmelzetemperatur von 280 °C und einer Werkzeugtemperatur von 90 °C Rundplatten mit einem Durchmesser von 25 mm und einer Dicke von 2 mm hergestellt.

Die Transparenz und der Rohton der so hergestellten Formkörper wurde zunächst visuell beurteilt. Weiterhin wurden die entsprechenden wellenlängenabhängigen totalen Transmissionsgrade nach DIN 5033-7 (2014) daran bestimmt und daraus nach DIN EN ISO 11664-3 (2013) mit der Lichtart D65 und dem 10°-Beobachter der Transmissions-Wert Ty(D65, 10°) und der Gelbwert YI(D65, 10°) berechnet. Diese Werte sind ebenfalls in Tabelle 2 aufgeführt.

**Tabelle 2: Thermoplastische PC/PMMA-Formmassen, deren strukturelle Merkmale sowie Eigenschaften daraus hergestellter Formkörper**

| **Zusammensetzung** | **PC/PMMA-1*** | **PC/PMMA-2** |
|---|---|---|
| PC-2^{*} | 80 | |
| PC-3 | | 80 |
| PMMA-GMA | 20 | 20 |
| **Eigenschaften** | | |
| Transmission Y(D65, 10°) [%] | 35 | 77 |
| Gelbwert | 42 | 16 |
| Säurezahl [mg KOH/g] | 2,3 | 2,8 |
| Reduktion der relativen Intensität des Epoxy-¹H NMR-Signals bei 3,22 ppm [%]^{∗∗} | 76 | 92 |
| Enthält PC-PMMA-Copolymer gemäß ¹H NMR-Auswertung (Signal bei 4,5 ppm) | ja | ja |

| | | |
|---|---|---|
| Mit ^{∗} gekennzeichnete Polycarbonate sind nicht erfindungsgemäße Beispiele. ^{∗∗}Unter relativer Intensität wird das Verhältnis der Intensitäten des den ungeöffneten Epoxy-Gruppen zugeordneten ¹H NMR-Signals bei 3,22 ppm, gemessen relativ zu Trimethylsilan (TMS) als Referenz, zur Intensität des NMR-Signals des den drei Methylgruppen-Protonen im Methylmethacrylat zuordneten Singulett-Signals bei 3,6 ppm, gemessen relativ zu Trimethylsilan (TMS) als Referenz, verstanden. Die Reduktion dieser relativen Intensität in den PC/PMMA-Beispielen relativ zum Ausgangsrohstoff PMMA zeigt den Umsatz der Epoxy-Gruppen bei der Reaktivextrusion an. | | |

Die Daten in Tabelle 2 zeigen, dass mit dem erfindungsgemäßen Polycarbonat PC-3 höhere prozentuale Umsätze der Epoxygruppen des PMMA-GMA-Copolymers in der Blockcopolymerausbildenden Zielreaktion realisiert wurden als mit dem Vergleichs-Polycarbonat PC-2^{∗}. Weiterhin zeigen die Daten, dass die aus dem erfindungsgemäßen Polycarbonat PC-3 hergestellten erfindungsgemäßen, Copolymer enthaltende PC/PMMA-Formmasse PC/PMMA-2 eine höhere Transmission aufweist als die Vergleichs-PC/PMMA-Formmasse PC/PMMA-1^{∗}, welche mit dem nicht erfindungsgemäßen Polycarbonat PC-2^{*} in analogem Verfahren hergestellt wurde. Darüber hinaus zeigen die Daten in Tabelle 2, dass PC/PMMA-2 gegenüber PC/PMMA-1^{∗} einen geringeren Gelbwert, das heißt eine verbesserte Farbneutralität aufweist. PC-2^{*} unterscheidet sich dabei von dem erfindungsgemäßen PC-3 ausschließlich darin, dass bei dessen Endgruppenpyrolyse keine phosphorige Säure zugesetzt wurde.

## Patentansprüche

1. Polycarbonat enthaltend von Bisphenol-A abgeleitete Struktureinheiten und
A) von einer Hydroxybenzoesäure abgeleitete, als Endgruppen vorliegende Struktureinheiten mit freier COOH-Funktionalität und
B) optional von einer Hydroxybenzoesäure abgeleitete Struktureinheiten,
wobei Komponente B) ausgewählt ist aus mindestens einem Vertreter aus
B1) von einer Hydroxybenzoesäure abgeleiteten, als Endgruppen vorliegenden Struktureinheiten mit veresterter COOH-Funktionalität,
und
B2) von einer Hydroxybenzoesäure abgeleiteten Struktureinheiten, welche über eine Ester- oder Säureanhydrid-Gruppe in der Polymer-Kette eingebaut vorliegen,
wobei der Gehalt an freiem Bisphenol A in dem Polycarbonat bei maximal 50 ppm liegt und
wobei für den Fall, dass Komponente B enthalten ist, das Verhältnis der molaren Menge von Komponente B1 zur Summe der molaren Mengen von Komponenten A und B bei maximal 0,07 liegt.

2. Polycarbonat gemäß Anspruch 1, wobei Komponente B enthalten ist.

3. Polycarbonat gemäß einer der vorhergehenden Ansprüche, **dadurch gekennzeichnet, dass** Komponente B2 enthalten ist und das Verhältnis der molaren Menge von Komponente B2 zur Summe der molaren Mengen von Komponenten A und B2 bei 0,001 bis 0,25 liegt.

4. Polycarbonat gemäß einem der vorhergehenden Ansprüche, wobei das Verhältnis der molaren Menge von Komponente A zur molaren Menge von Komponente B bei mindestens 8 liegt.

5. Polycarbonat gemäß einem der vorhergehenden Ansprüche, weiterhin enthaltend
C) von mindestens einer phenolischen Verbindung mit nur einer phenolischen OH-Funktionalität, welche keine Carboxy- oder Carboxyderivat-Funktionalität enthält, abgeleitete, als Endgruppen vorliegende Struktureinheiten,
**dadurch gekennzeichnet, dass** Komponente C in dem Polycarbonat in einem molaren Anteil, bezogen auf in Summe 100 mol-% der molaren Anteile der Komponenten A, B1, B2 und C, von 50 bis 90 mol-% vorliegt.

6. Verfahren zur Herstellung eines Polycarbonats (II), wobei
ein Polycarbonat (I)
in Gegenwart von 0,01 bis 0,30 Gew.-%, bezogen auf die Menge des Polycarbonats (I), an phosphoriger Säure H₃PO₃
unter Anlegen eines Unterdrucks für 10 s bis 15 min,
einer Temperatur im Bereich von 240 bis 360°C, ausgesetzt wird
und dabei das Polycarbonat (II) gebildet wird.

7. Verfahren gemäß Anspruch 6, wobei das Polycarbonat (I) von Bisphenol-A abgeleitete Struktureinheiten und von mindestens einem Hydroxybenzoesäureester abgeleitete Endgruppen enthält und wobei das Polycarbonat (II) von Bisphenol A abgeleitete Struktureinheiten und von einer Hydroxybenzoesäure abgeleitete Endgruppen mit freier COOH-Funktionalität enthält.

8. Verfahren gemäß Anspruch 7, wobei das Polycarbonat (I) in einem vorhergehenden Schritt hergestellt wird durch Phosgenierung im Phasengrenzflächenverfahren oder in organischer Lösung von Bisphenol-A oder einer Mischung von mehreren, strukturell unterschiedlichen Diolen enthaltend Bisphenol-A in Anwesenheit mindestens eines Esters einer Hydroxybenzoesäure oder einer Mischung enthaltend mindestens einen Ester einer Hydroxybenzoesäure und mindestens eine phenolische Verbindung mit nur einer phenolischen OH-Funktionalität, welche keine Carboxy- oder Carboxyderivat-Funktionalität enthält,
als Kettenabbrecher beziehungsweise Kettenabbrecher-Mischung
und wobei der mindestens eine Ester einer Hydroxybenzoesäure ein Ester einer Hydroxybenzoesäure verestert mit einem Alkohol der allgemeinen Strukturformel (1) 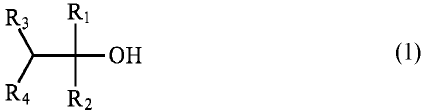 ist, wobei R₁ bis R₄ unabhängig voneinander für Wasserstoff oder einen Alkyl-, Aryl- oder Alkylaryl-Rest mit jeweils 1 bis 10 C-Atomen stehen.

9. Verfahren gemäß Anspruch 8, wobei direkt nach der Herstellung des Polycarbonats (I) in einem weiteren, der Bildung von Polycarbonat (II) vorgeschalteten Verfahrensschritt Lösungsmittel, die bei der Herstellung des Polycarbonats (I) zum Einsatz kamen, bis zu einem Restgehalt von <0,1 Gew.-% entfernt werden
und wobei die Entfernung des Lösungsmittels entweder durch Fällung, optional Trennung des gefällten Feststoffs von der Mutterlauge, optional Wäsche des gefällten Feststoffs und Trocknung oder alternativ durch Sprühtrocknung erfolgt und wobei das Polycarbonat (I) zu keinem Zeitpunkt dieses vorgeschalteten Aufarbeitungs-Verfahrensschrittes einer Temperatur >200°C ausgesetzt wird.

10. Verfahren gemäß einem der Ansprüche 6 bis 9, wobei die Herstellung von Polycarbonat (II) aus Polycarbonat (I) in einem Verfahrensaggregat ausgewählt aus der Gruppe umfassend Einwellenextruder, gleichläufige oder gegenläufige Doppelwellenextruder, Planetwalzenextruder, kontinuierliche oder diskontinuierliche Innenkneter, Filmtruder, Strangverdampfer und Schaumverdampfer durchgeführt wird.

11. Thermoplastische Masse enthaltend ein Polycarbonat gemäß einer der Ansprüche 1 bis 5 und mindestens eine Phosphorverbindung, ausgewählt aus der Gruppe bestehend aus phosphoriger Säure, Phosphorsäure, Salzen der phosphorigen Säure und Phosphorsäure sowie Kondensaten der phosphorigen Säure und Phosphorsäure, wobei diese Phosphorverbindungen in Summe in einer Menge von 0,01 bis 0,30 Gew.-% in der thermoplastischen Masse enthalten sind.

12. Copolymer enthaltend Struktureinheiten abgeleitet von einem Polycarbonat gemäß einem der Ansprüche 1 bis 5 sowie enthaltend Struktureinheiten abgeleitet von einem weiteren Polymer enthaltend mindestens eine Art funktioneller Gruppen ausgewählt aus Ester-, Hydroxy- und Epoxygruppen.

13. Thermoplastische Formmasse enthaltend ein Copolymer gemäß Anspruch 12 und/oder ein Polycarbonat gemäß einer der Ansprüche 1 bis 5 und/oder eine thermoplastische Masse gemäß Anspruch 11.

14. Verwendung eines Polycarbonats gemäß einer der Ansprüche 1 bis 5 oder einer thermoplastischen Masse gemäß Anspruch 11 zur Herstellung eines Copolymers enthaltend mindestens einen Polycarbonat-Block enthaltend von Bisphenol-A abgeleitete Struktureinheiten und mindestens einen Block eines von einem solchen Polycarbonat unterschiedlichen Polymers oder zur Herstellung einer thermoplastischen Formmasse, welche ein solches Copolymers enthält, in einem Verfahren umfassend die Schritte
a) Aufschmelzen einer Zusammensetzung enthaltend
das Polycarbonat oder die thermoplastische Masse und ein weiteres Polymer, enthaltend mindestens eine Art funktioneller Gruppen ausgewählt aus Ester-, Hydroxy- und Epoxygruppen durch Einbringen thermischer Energie und/oder mechanischer Scherung,
b) Vermischen und Dispergieren der verschiedenen Komponenten der Zusammensetzung mit- bzw. ineinander,
c) Verfestigen der Schmelze durch Abkühlen,
d) optional Granulieren des verfestigten aus den Schritten (a) bis (c) resultierenden Produktes,
wobei im Rahmen des Verfahrens in der Schmelze eine chemische Kopplungsreaktion der von einer Hydroxybenzoesäure abgeleiteten, als Endgruppen vorliegenden Struktureinheiten mit freier COOH-Funktionalität im Polycarbonat (II) mit dem Polymer enthaltend mindestens eine Art funktioneller Gruppen ausgewählt aus Ester-, Hydroxy- und Epoxygruppen erfolgt.

15. Formkörper enthaltend ein Polycarbonat gemäß einem der Ansprüche 1 bis 5 und/oder ein Copolymer gemäß Anspruch 12.
